(19) Europäisches Patentamt
European Patent Office
Office européen des brevets

(11) **EP 3 621 726 B1**

(12) **EUROPEAN PATENT SPECIFICATION**

(45) Date of publication and mention
of the grant of the patent:
**26.01.2022 Bulletin 2022/04**

(21) Application number: **18722983.6**

(22) Date of filing: **07.05.2018**

(51) International Patent Classification (IPC):
**B01J 19/00** *(2006.01)*    **G05B 23/02** *(2006.01)*

(52) Cooperative Patent Classification (CPC):
**B01J 19/002; B01J 19/0006;** B01J 2219/00031;
B01J 2219/00074; B01J 2219/00261

(86) International application number:
**PCT/EP2018/061657**

(87) International publication number:
**WO 2018/206480 (15.11.2018 Gazette 2018/46)**

(54) **METHOD AND SYSTEM FOR MONITORING THE OPERATING CONDITIONS OF A SEMIBATCH REACTOR**

VERFAHREN UND SYSTEM ZUR ÜBERWACHUNG DER BETRIEBSZUSTÄNDE EINES SEMIBATCH-REAKTORS

PROCÉDÉ ET SYSTÈME DE SURVEILLANCE DES CONDITIONS DE FONCTIONNEMENT D'UN RÉACTEUR SEMI-DISCONTINU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.05.2017 EP 17170771**

(43) Date of publication of application:
**18.03.2020 Bulletin 2020/12**

(73) Proprietor: **Mitec S.r.l. Società Di Ingegneria
24129 Bergamo (BG) (IT)**

(72) Inventor: **MAESTRI, Francesco
24126 Bergamo (IT)**

(74) Representative: **Botti, Mario et al
Botti & Ferrari S.p.A.
Via Cappellini, 11
20124 Milano (IT)**

(56) References cited:
KR-B1- 100 651 091    US-A1- 2005 246 067
US-B1- 6 195 010

- **FRANCESCO MAESTRI ET AL: "Simple Monitoring of Semibatch Polymerization Processes: An Integrated Criterion", INDUSTRIAL & ENGINEERING CHEMISTRY RESEARCH, vol. 56, no. 26, 5 July 2017 (2017-07-05), pages 7434-7444, XP055490095, ISSN: 0888-5885, DOI: 10.1021/acs.iecr.7b00929**
- **FRANCESCO MAESTRI ET AL: "Kinetic-Free Safe Operation of Fine Chemical Runaway Reactions: A General Criterion", INDUSTRIAL & ENGINEERING CHEMISTRY RESEARCH, vol. 55, no. 4, 3 February 2016 (2016-02-03), pages 925-933, XP055490701, ISSN: 0888-5885, DOI: 10.1021/acs.iecr.5b04234**
- **FRANCESCO MAESTRI ET AL: "Kinetic-free selectivity control of chemical reactions leading to nonvolatile products", CHEMICAL ENGINEERING SCIENCE, vol. 134, 1 September 2015 (2015-09-01), pages 708-720, XP055490098, GB ISSN: 0009-2509, DOI: 10.1016/j.ces.2015.05.041**
- **Francesco Maestri: "SAFE AND PRODUCTIVE OPERATION OF SEMIBATCH REACTORS: DEVELOPMENT AND VALIDATION OF A GENERAL PROCEDURE", , 31 October 2006 (2006-10-31), XP055490136, Retrieved from the Internet: URL:https://pubs.acs.org/doi/abs/10.1021/i e060067g [retrieved on 2018-07-04]**

## Description

Application field

The present invention relates to a method and to a system for monitoring the safe operation of potential runaway reactions performed in non-continuous reactors. More in particular, the present invention relates to a method and to a system for monitoring the operating conditions of a semibatch reactor in which such potential runaway reactions are performed and controlled, and the following description refers to this application field with the only purpose of simplifying its exposition.

Prior art

In the fine chemical and pharmaceutical industries, a number of noncontinuous reaction processes experience safety problems because of potentially runaway reactions that can cause dangerous reactor overpressures. In particular, it is known that fast and exothermic reactions can lead to thermal explosions and thermal runaways.

In the above indicated cases, the reaction should be better performed in a semibatch reactor (SBR), i.e. a reactor in which a first reactant is initially loaded and a second reactant (called herein coreactant) is subsequently dosed in a suitable time period, allowing for the control of the conversion rate and of the reaction heat evolution.

The semibatch reactor SBR is typically operated under the so-called target conditions, that is at a minimum coreactant accumulation (leading to a conversion rate close to the dosing rate and therefore negligibly influenced by the reaction kinetics) and at a high reactor cooling efficiency (leading to a nearly isothermal SBR operation). In general, under the target conditions, the system is characterized by a quick onset, a nearly complete conversion at the end of the supply period (also called "fair conversion") and a smooth temperature profile. Such conditions are referred to as QFS conditions.

In order to minimize the coreactant accumulation in the system, a dosing time much higher than the characteristic time of the reaction should be adopted, where the characteristic time of the reaction is directly related to the process macrokinetics (accounting for both the chemical reaction and the mass transfer phenomena). However, because of the huge number of reactions involved, the kinetic parameters are often unknown and, in any case, not straightforward to characterize, also because of the simultaneous occurrence of mass-transfer phenomena in heterogeneous systems. In any case, the dosing time should allow for a satisfactory productivity of the reactor.

Moreover, several potential runaway reaction processes can be found that are characterized by significant viscosity changes with the reaction conversion. Among these, a number of polymerization processes can be mentioned, undergoing a peak in the reaction mass viscosity at the higher polymer fractions.

Performing such reactions in indirectly cooled semibatch reactors operated under isoperibolic conditions, the reactor heat transfer efficiency can significantly drop in the late part of the supply period, even if the reaction ignition is kept all along the coreactant supply.

Provided that the resulting temperature increase can be accepted from both a safety and a product quality point of view, this SBR operating regime is still safe, since the coreactant accumulation is in any case minimized and no loss of control of the reaction can occur.

Generally, a low system reactivity during the dosing period and/or an early decay of the reactor heat removal efficiency are the root causes of dangerous scenarios and therefore there is the need to promptly detect these phenomena.

According to known solutions, a number of criteria have been developed allowing for selecting safe operating conditions of exothermic semibatch reactors SBR as well as for early detecting anomalous operating regimes of the reactor leading to the thermal loss of control of the reaction. In particular, a number of these known solutions do not require the mathematical model of the reactor to be solved by the end user, but still need a kinetic characterization of the reaction system, which is often not straightforward to be performed when dealing with multipurpose processes of the fine chemical industry and with the simultaneous occurrence of mass transfer phenomena in heterogeneous systems.

According to other known solutions, there are monitoring criteria that are not able to perform a preventive early warning when a reactivity drop occurs, the incidental scenario being detected and signaled only when it is going to happen, thus allowing only for protective measures and not for preventive measures.

In "Maestri and Rota, Kinetic-free safe operation of fine chemical runaway reactions: a general criterion, Ind. Eng. Chem. Res. 2016, 55, 925", and in "Maestri and Rota, Kinetic-Free Safe Optimization of a Semibatch Runaway Reaction: Nitration of 4-Chloro Benzotrifluoride, Ind. Eng. Chem. Res. 2016, 55, 12786" a general safety criterion is disclosed, referred to as the $\Psi$ criterion, which allows for selecting safe operating conditions of a semibatch reactor as well as to monitor the reactor operation at the industrial scale, allowing for recognizing a regime wherein the conversion rate is fully determined by the coreactant supply rate and the reaction heat is removed at a much lower time scale than that at which it is evolved.

However, when dealing with well ignited reaction systems that undergo significant variations of the reaction mass viscosity and hence of the reactor heat transfer efficiency, the Ψ criterion cannot be univocally adopted to monitor the reactor operation because a Ψ number sudden decrease during the coreactant supply could be related to both an undesired drop of the system reactivity or to a normal thickening of the reaction mass, such as that occurring in a number of polymerization systems. In particular, monitoring the system only through the Ψ criterion would lead to false alarms in such situations, which is clearly undesirable.

Moreover, there is still the need to efficiently monitor the operating conditions of a semibatch reactor in which multiple reactions can occur.

The technical problem of the present invention is to devise a method, and a related system, for monitoring the operating conditions of a reactor having features such as to overcome the limitations and drawbacks still affecting the known solutions, in particular able to monitor the reactor without a kinetic characterization thereof, discriminating between normal variations of the reactor heat transfer efficiency and anomalous and dangerous process scenarios, therefore being able to detect and to signal the initial occurrence of an anomalous operation of the reactor without triggering a false alarm.

Summary of the invention

The solution idea at the basis of the present invention is to develop an integral form of the energy balance for a reactor (in particular for a semibatch reactor) in order to perform an on-going measure of the coreactant conversion degree in such a reactor, such an integral form of the energy balance being obtained only through the measure of available process variables, such as the temperature of the reactants and of the coolant and the flowrates, yielding a set a useful process-indicators. These process indicators are thus independent on the reaction kinetic parameters and can be easily calculated all along the supply period through some suitable process variables.

The aforementioned integral form of the energy balance allows for promptly distinguishing between anomalous or even dangerous process scenarios and normal variations of the semibatch reactor heat transfer efficiency, as those resulting from an expected thickening of the reaction mass: as a result, only in the former cases an interruption of the coreactant feed and/or any other specific emergency action of the reaction system could be promptly triggered.

A criterion has therefore been developed allowing for monitoring the safe operating conditions of industrial semibatch runaway reactions without requiring any kinetic characterization of the reaction system. The only required information are the heat of the reaction and some fully available process variables that are normally recorded for any industrial reactor.

The proposed criterion has been used to monitor the operation of industrial semibatch reactors, for example a reactor in which a solvent based precipitation polymerization of acrylic acid is performed for the production of a class of rheology modifiers.

On the basis of this inventive solution idea, the above technical problem is solved by a method for monitoring the safe operation of potential runaway reactions performed in a non-continuous indirectly cooled semibatch reactor (SBR), comprising the steps of:

- providing at least one reactant in the reactor;

- feeding at least one coreactant;

- measuring process variables, wherein said process variables comprise at least the temperature of the reaction mass, the temperature of the feed stream, the inlet and outlet temperatures of a coolant of said reactor, the flowrate of said coreactant, and the flowrate of said at least one coolant;

- calculating an integral parameter of the conversion degree of the coreactant on the basis of those measured process variables, the integral parameter being the ratio between the reacted coreactant and the fed coreactant, wherein the reacted coreactant is expressed in terms of energy uses in the reactor as a function of the enthalpy of the reaction mass and of the coolant, and wherein the fed coreactant is expressed in terms of overall energy sources as a function of the reaction enthalpy; and

- checking if the integral parameter is within a predetermined target range of target values thereof.

According to the invention, the integral parameter (X) is equal to:

$$X = \frac{(m\hat{C}_P)_0(T-T_0)+(m\hat{C}_P)_{fed}(T-T_{dos})+\int_0^t(\dot{m}\hat{C}_P\Delta T)_{cool}dt}{(-\Delta\hat{H}_r)m_{fed}\omega_A/\nu_A} \times 100$$

where m indicates the mass, $\dot{m}$ indicates the mass flowrate, $\hat{C}_p$ is the mass heat capacity at constant pressure, $T$ is the reactor temperature, $\Delta T$ is the coolant temperature variation, $\Delta H$ is the reaction enthalpy, $\omega_A$ is the mass fraction of said coreactant (A), $v_A$ is the stochiometric coefficient of said coreactant (A), O refers to the beginning of the feeding of said coreactant (A), $T_o$ is the reactor temperature at the beginning of the supply period, cool refers to the coolant of said reactor, and dos refers to the dosed coreactant.

In particular, this method allows for identifying at the laboratory or pilot plant scale (and for monitoring at the industrial scale) the operating conditions of the reactor, which is preferably a semibatch reactor.

More particularly, the invention comprises the following additional characteristics, taken individually or in combination if required.

According to an aspect of the present invention, the method can comprise the step of detecting a displacement of the operating conditions of the reactor from target operating conditions according to a displacement of the integral parameter from the predetermined target range of target values thereof.

According to another aspect of the present invention, the method can further comprise a step of calculating the maximum temperature of the synthesis reaction ($\Theta$) under adiabatic condition of the reactor according to the formula:

$$\Theta = T + (1 - \vartheta X / 100)\Delta T_{ad}$$

wherein T is the temperature, X is the integral parameter, $\vartheta$ is the time $t$ divided by the dosing time $t_{dos}$ and ad indicates the adiabatic conditions.

According to another aspect of the present invention, the method can further comprise a step of calculating a differential parameter which is the measure of the instantaneous variation of the operating conditions of the reactor from a pseudo-steady-state regime with respect to both the coreactant accumulation and the reaction temperature, this differential parameter being given by:

$$\Psi = \frac{F_{dos}\tilde{C}_{P,dos}(T - T_{dos}) + \dot{M}_{cool}\hat{C}_{P,cool}(T_{cool,OUT} - T_{cool,IN})}{\frac{F_{A,dos}}{\nu_A}(-\Delta\tilde{H})} \times 100$$

where $\dot{m}$ is the mass flowrate, $\Delta H$ is the reaction enthalpy, $T$ is the temperature, $\hat{C}_p$ is the mass heat capacity at constant pressure, $\omega_A$ is the mass fraction of the coreactant, $v_A$ is the stochiometric coefficient of the coreactant, cool indicates the coolant of the reactor, and dos relates to the dosed coreactant.

According to another aspect of the invention, the method can comprise a step of checking if the integral parameter, the differential parameter and the maximum temperature of the synthesis reaction are within predetermined target ranges of target values thereof.

In particular, the step of checking can be performed in a predetermined sequence, wherein:

-   firstly, the differential parameter is compared with the predetermined target range thereof;

-   then, the maximum temperature of the synthesis reaction is compared with the maximum allowable temperature of the system, as estimated from safety and/or quality constraints of said reactor; and

-   finally, the integral parameter is compared with the predetermined target range thereof.

According to another aspect of the invention, the predetermined target range can be between 60 and 100, preferably 80-100, for the differential parameter, and can be between 60 and 100, preferably 90-100, for the integral parameter.

According to another aspect of the invention, the method can further comprise a step of signaling a dangerous scenario and/or interrupting the feeding of the coreactant and/or adopting emergency actions for the performed process in case the differential parameter is outside the predetermined target range and the maximum temperature of the synthesis reaction is higher than the maximum allowable temperature of the system, or in case the differential parameter is outside the predetermined target range and said integral parameter is outside the predetermined target range.

According to yet another aspect of the present invention, the reaction occurring in the reactor can be a potentially runaway reaction, including polymerizations, nitrations, sulfonations, hydrogenations, halogenations, hydrolysis, condensations, oxidations, alcoholysis, amminations, cyclizations, diazotations, isomerizations, alkylations, and/or multiple consecutive reactions.

The present invention also relates to a system for monitoring the safe operation of potential runaway reactions performed in a non-continuous indirectly cooled semibatch reactor (SBR) in which at least one reactant is provided and in which at least one coreactant is fed, the system comprising means for receiving measured process variables, those process variables comprising at least the temperature of the reaction mass, the temperature of the feed stream, the inlet and outlet temperatures of a coolant of said reactor, the flowrate of said coreactant, and the flowrate of said at least one coolant, the system being characterized in that it comprises a processing unit adapted to calculate at least an integral parameter of the conversion degree of the fed coreactant on the basis of those measured process variables, this integral parameter being the ratio between the reacted coreactant and the fed coreactant, wherein the reacted coreactant is expressed in terms of energy uses in the reactor as a function of the enthalpy of the reaction mass and of the coolant, and wherein the fed coreactant is expressed in terms of overall energy sources as a function of the reaction enthalpy, wherein the processing unit is adapted to check if the integral parameter is within a predetermined target range of target values.

According to the invention, the integral parameter (X) calculated by the processing unit is equal to:

$$X = \frac{(m\hat{C}_P)_0(T-T_0)+(m\hat{C}_P)_{fed}(T-T_{dos})+\int_0^t(\dot{m}\hat{C}_P\Delta T)_{cool}dt}{(-\Delta\tilde{H}_r)m_{fed}\omega_A/\nu_A} \times 100$$

where m indicates the mass, $\dot{m}$ indicates the mass flowrate, $\hat{C}_p$ is the mass heat capacity at constant pressure, $T$ is the reactor temperature, $\Delta T$ is the coolant temperature variation, $\Delta H$ is the reaction enthalpy, $\omega_A$ is the mass fraction of said coreactant (A), $\nu_A$ is the stochiometric coefficient of said coreactant (A), $O$ refers to the beginning of the feeding of said coreactant (A), $T_o$ is the reactor temperature at the beginning of the supply period, *cool* refers to the coolant of said reactor, and dos refers to the dosed coreactant.

According to an aspect of the present invention, the system can comprise means apt to generate a signal in case of detection of a displacement of the operating conditions of the reactor from target operating conditions previously stored in the system, according to a displacement of the integral parameter from the predetermined target range thereof.

In particular, the signal generated can be a warning signal in the form of an acoustic signal and/or a light signal.

According to another aspect of the present invention, the signal generated can be a trigger signal adapted to interrupt the feeding of the coreactant and/or adapted to perform emergency actions for the performed process.

According to another aspect of the present invention, the processing unit can be adapted to calculate the maximum temperature of the synthesis reaction under adiabatic condition of the reactor according to the formula:

$$\Theta = T + (1 - \vartheta X / 100)\Delta T_{ad}$$

wherein $T$ is the temperature, X is the integral parameter, $\vartheta$ is the time $t$ divided by the dosing time $t_{dos}$ and *ad* indicates the adiabatic condition.

According to another aspect of the present invention, the processing unit can be adapted to calculate a differential parameter which is the measure of the instantaneous variation of the operating conditions of the reactor from a pseudo-steady-state regime, this differential parameter being given by:

$$\Psi = \frac{F_{dos}\tilde{C}_{P,dos}(T - T_{dos}) + \dot{M}_{cool}\hat{C}_{P,cool}(T_{cool,OUT} - T_{cool,IN})}{\frac{F_{A,dos}}{\nu_A}(-\Delta\tilde{H})} \times 100$$

where $\dot{m}$ is the mass flowrate, $\Delta H$ is the reaction enthalpy, $T$ is the temperature, $\hat{C}_p$ is the mass heat capacity at constant pressure, $\omega_A$ is the mass fraction of the coreactant, $\nu_A$ is the stochiometric coefficient of the coreactant, *cool* indicates the coolant of the reactor, dos relates to the dosed coreactant.

According to yet another aspect of the present invention, the processing unit can be adapted to compare in a predetermined sequence the integral parameter, the differential parameter, and the maximum temperature of the synthesis reaction with target values thereof.

Moreover, the means can be adapted to receive two temperature values for each temperature to be measured, so that the mean value of these two temperature values is calculated.

The characteristics and the advantages of the method and of the system according to the present invention will become apparent from the following description of an embodiment thereof, provided as a nonlimiting example with reference to the accompanying drawings.

Brief description of the drawings

In those drawings:

- figures 1A-1D show the behavior of an exothermic semibatch reactor operated under target conditions QFS (QFS conditions), in particular they show trends for reaction temperature vs. time, $\Psi$ parameter vs. time, X parameter vs. time, and $\Theta$ parameter vs. time, respectively;

- figures 2A-2D show the behavior of an exothermic semibatch reactor with reactivity drop occurring at the 70% of the supply period, in particular they show trends for reaction temperature vs. time, $\Psi$ parameter vs. time, X parameter vs. time, and $\Theta$ parameter vs. time, respectively;

- figures 3A-3D show the behavior of an exothermic semibatch reactor with heat transfer efficiency drop occurring at the 70% of the supply period, in particular they show trends for reaction temperature vs. time, $\Psi$ parameter vs. time, X parameter vs. time, and $\Theta$ parameter vs. time, respectively;

- figure 4 shows the behavior of an exothermic semibatch reactor, in particular it shows trends of the X parameter vs. time at decreasing UA values (UA being the heat transfer coefficient multiplied by the initial heat transfer surface);

- figure 5 shows the monitoring logic for the semibatch reactor through the set of key process indicators given by $\Psi$, X and $\Theta$;

- figures 6A-6B show a semibatch solvent based polymerization of acrylic acid, in particular they show experimental reaction temperature trends at the industrial scale during the monomer supply period when thickening of the reaction mass occurs at the 70% of the monomer supply, and when reaction inhibition occurs at the 40% of the monomer supply, respectively;

- figures 7A-7B show the semibatch solvent based polymerization of acrylic acid, in particular they show experimental $\Psi$ parameter trends at the industrial scale during the monomer supply period when thickening of the reaction mass occurs at the 70% of the monomer supply, and when reaction inhibition occurs at the 40% of the monomer supply, respectively;

- figures 8A-8B show the semibatch solvent based polymerization of acrylic acid, in particular they show experimental X parameter trends at the industrial scale during the monomer supply period when thickening of the reaction mass occurs at the 70% of the monomer supply, and when reaction inhibition occurs at the 40% of the monomer supply, respectively;

- figures 9A-9B show the semibatch solvent based polymerization of acrylic acid, in particular the show the experimental $\Theta$ parameter trends at the industrial scale during the monomer supply period when thickening of the reaction mass occurs at the 70% of the monomer supply, and when reaction inhibition occurs at the 40% of the monomer supply, respectively;

- figure 10 shows the behaviour of the integral parameter X in case of multiple consecutive reactions; and

- figure 11 shows a system for monitoring the operating condition of a reactor according to the present invention.

Detailed description

With reference to those figures, a method for monitoring the safe operation of potential runaway reactions performed in a non-continuous indirectly cooled reactor is described in the following. Moreover, a corresponding system is also disclosed.

It is worth noting that the figures represent schematic views and are not drawn to scale, but instead they are drawn so as to emphasize the important features of the invention. Moreover, in the figures, the different elements are depicted in a schematic manner, their shape varying depending on the application desired. It is also noted that in the figures the same reference numbers refer to elements that are identical in shape or function. Finally, particular features described in relation to an embodiment illustrated in a figure are also applicable to the other embodiments illustrated in the other figures.

The present invention will be described according to a preferred embodiment wherein the reactor is a semibatch reactor SBR, without limiting the scope thereof.

The method of the present invention is based on a simple and general criterion for the on-going measurement of the reaction extent during the coreactant supply in the semibatch reactor SBR, using an integral form of the semibatch reactor SBR mathematical model, being the reaction conversion an integral property of the reaction system.

In general, in a semibatch reactor SBR, a reactant B is initially present in the reactor, a coreactant A being added to the reactant B in a dosing time $t_{dos}$. The semibatch reactor SBR is cooled by means of a suitable coolant, for example flowing a cooling jacket, as it is known in the art, in order to remove the heat generated by the reaction in the reactor. Obviously, any coolant means can be used without limiting the scope of the present invention.

Conveniently, the calculation of the above mentioned integral model only requires the preliminary measurement of process variables such as the temperature of the reaction mass, the temperature of the feed stream, the inlet and outlet temperatures of the coolant of the semibatch reactor SBR, the feed stream of flowrate, and the coolant flowrate, as it will be better specified in the following.

In the mathematical model of the semibatch reactor SBR discussed in the following pages, the following symbols and notations (with the respective units) will be used:

$A$: heat transfer surface, $m^2$;

$\tilde{C}_P$: molar heat capacity at constant pressure, kJ/(kmol·K);

$\hat{C}_p$: mass heat capacity at constant pressure, kJ/(kg·K);

$F$: molar flowrate, kmol/s;

$m$: mass, kg;

$MAT$: maximum allowable temperature, °C or K;

$\Theta$: maximum temperature of the synthesis reaction, °C or K;

$\dot{m}, \dot{M}$: mass flowrate, kg/s;

$n$: number of moles, kmol;

$r$. reaction rate, kmol/($m^3$·s);

$t$: time, s;

$T$: temperature, °C or K;

$\bar{T}$: average temperature, °C or K;

$U$: overall heat transfer coefficient, kW/($m^2$·K);

$V$: reaction volume, $m^3$;

$Wt$: Westerterp number;

$\Delta\tilde{H}$: reaction enthalpy, kJ/kmol;

$\Delta\hat{H}$: reaction enthalpy referred to the mass of the reacted coreactant, kJ/kg;

$\Delta T$: temperature difference, °C or K;

$\varepsilon$: $=V_{dos}/V_{r0}$, relative volume increase;

$\zeta$: molar conversion (or reaction conversion), normalized to unity;

$\vartheta$: $= t/t_{dos}$, dimensionless time;

v: stoichiometric coefficient;

$\tilde{P}$: molar density, $kmol/m^3$; and

$\omega$: mass fraction.

Given a potential runaway reaction of general kinetic expression performed in an isoperibolic semibatch reactor SBR (either in a homogeneous or heterogeneous reaction system), if a stoichiometric amount of coreactant A, $n_{A1}$, is dosed at a constant rate onto a previously loaded amount of reactant B, $n_{BO}$, the mass balance equation for the semibatch reactor in terms of molar conversion of reactant B, $\zeta_\beta$, can be written as:

$$\frac{d\zeta_B}{dt} = \frac{\nu_B r^{eff} V_r}{n_{B0}} \qquad (1)$$

where $V_r$ is the reaction volume and $\nu_B$ is the stoichiometric coefficient of the reactant B. The effective reaction rate, $r^{eff}$, depends on the reaction microkinetic expression and, for heterogeneous systems, on the phase in which the reaction occurs as well as on the rate determining step between the chemical reaction and the mass transfer phenomena. Of course, at the beginning of the supply period, the number of moles in the reactor differs from zero only for the reactant B.

The energy balance equation for the semibatch reactor SBR during the supply period is known to be:

$$\left[\left(n\tilde{C}_P\right)_0 + \left(n\tilde{C}_P\right)_{fed}\right]\frac{dT}{dt} = \left(F\tilde{C}_P\right)_{dos}(T_{dos} - T) + V_r r^{eff}\left(-\Delta\tilde{H}_r\right) - UA(T - \bar{T}_{cool}) \qquad (2)$$

according to which the reactor temperature time profile is determined by the reaction enthalpy contribution and the combined cooling effect of the external coolant and the dosing stream. In other words, the temperature behavior is the result of three enthalpy contributions, related to the dosing stream, the chemical reaction, and the heat removal by the coolant. At the beginning of the supply period, the SBR is at a temperature $T_o$, which is equal to the coolant temperature, $T_{cool}$.

Combining equations (1) and (2) and integrating the resulting equation, the following general expression of the molar conversion, $\zeta_B$, can be derived:

$$\zeta_B = \frac{(n\tilde{C}_P)_0(T-T_0) + (n\tilde{C}_P)_{fed}(T-T_{dos}) + \int_0^t (\dot{m}\hat{C}_P\Delta T)_{cool}dt}{(-\Delta\tilde{H}_r)n_{B0}/\nu_B} \qquad (3)$$

where the heat removal rate by the external coolant has been expressed in terms of directly measurable process variables, that is the coolant flowrate and temperature increase across the reactor jacket, coil or external heat exchanger.

It is noticed that equation (3) allows for on-going detecting the reaction conversion on the basis of the semibatch reactor SBR initial conditions and of process variables which trends are normally recorded on any industrial semibatch reactor SBR, that is the dosing stream and reactor temperatures, the amount of coreactant fed to the reactor and the coolant mass flowrate and temperature increase across the heat transfer surfaces. Moreover, no kinetic characterization of the system must be performed, since the only required information related the chemical reaction is the reaction enthalpy: such a feature is of particular importance when dealing with multipurpose processes of the fine chemical industry, because of the huge variety of reactions involved.

It is stressed that the reaction conversion (3) is only marginally influenced by any variation of the reactor heat transfer efficiency, due for the sake of example to thickening phenomena of the reaction mass: a potential thermal insulation of the reactor at constant feed rate leads in fact to an increase of the reaction temperature, so that in terms of overall energy balance the heat evolved by the chemical reaction is balanced by the initial and dosed reaction mass enthalpy contributions.

In the limit case of infinite time, equation (3) provides:

$$\left(-\Delta\tilde{H}_r\right)n_{B0}\Big/\nu_B \cong \left(n\tilde{C}_P\right)_{dos}(T_0 - T_{dos}) + \int_0^\infty UA(T - \bar{T}_{cool})dt \qquad (4)$$

stating that the overall energy released by the chemical reaction equals the whole energy removed by the external coolant and the energy required for heating the dosed mass from $T_{dos}$ to To. In deriving equation (4) it has been taken into account that, as $t \to \infty$, the conversion is quantitative, the reaction temperature comes back to To (equal to the coolant temperature) and the amount of fed coreactant is equal to its overall dosed amount.

At the target conditions of the semibatch reactor SBR, the coreactant accumulation is at the limit negligible, the conversion rate is fully determined by the coreactant supply rate and therefore, at a constant feed rate, the instantaneous conversion equals the current fraction of the overall dosing period. As a consequence, it can be stated that:

$$\zeta_{B,ta} = \frac{t}{t_{dos}} \tag{5}$$

where the subscript "*ta*" identifies the target operating conditions limited to the chemical reaction ignition, independently on the reactor heat transfer efficiency. At the target conditions, the system is characterized by a quick onset, a fair conversion and a smooth temperature profile (QFS conditions).

According to the invention, by calculating the percentage ratio, expressed in mass terms, of the current reaction conversion (3) to its target value (5), the conversion degree of the dosed coreactant A can be obtained:

$$X = \frac{(m\hat{C}_P)_0(T-T_0)+(m\hat{C}_P)_{fed}(T-T_{dos})+\int_0^t(\dot{m}\hat{C}_P\Delta T)_{cool}dt}{(-\Delta \hat{H}_r)m_{fed}\omega_A/v_A} \times 100 = \zeta_A \tag{6}$$

where $\omega_A$ is the mass fraction of coreactant A. Equation (6) yields the integral parameter X, whose value approaches to 100 at the target conditions.

As a consequence, the full ignition of the SBR can be now easily recognized from a X-time profile quickly approaching values at the limit equal to 100 during the coreactant supply period.

The calculation of the integral parameter X according to equation (6) has to be performed after the coreactant dosing has been started, that is for t>0, since expression (6) is indeterminate from a strictly mathematical point of view at t=0. This is physically sound since at t=0 any semibatch reaction system is not triggered: in fact, an even minimum coreactant accumulation has to be previously built up in the reactor to provide a consumption rate of the coreactant balancing its supply rate at a much lower time scale (i.e. at t=0 the semibatch reactor SBR is not triggered). From that time on, the unreacted coreactant A concentration in the system reaches a pseudo steady state behavior, to which the integral parameter X values close to 100 correspond.

In other words, the integral parameter X is the percentage ratio between the actual reaction conversion $\zeta$ and its target value at the target operating conditions. Specifically, the molar conversion $\zeta_A$ of the coreactant A is expressed as a ratio between the reacted coreactant and the fed coreactant at a given time t, wherein the reacted coreactant is expressed in terms of energy uses (the heating enthalpy of the reaction mass and of the coolant) and the fed coreactant is expressed in term of energy sources at the target conditions as a function of the reaction enthalpy $\Delta H$. In other words, the integral parameter X is a direct measure of the conversion degree of the fed coreactant A, and hence of its accumulation. Notice also that the numerator comprises the integral of the heat removal rate due to the coolant over time.

Advantageously according to the present invention, a method is disclosed that allows for selecting safe operating conditions of the semibatch reactor SBR as well as to monitor its operation at the industrial scale, without a kinetic characterization of the system, but only on the basis of the heat of reaction and of fully available process variables that are normally recorded for any industrial semibatch reactor SBR. In particular, a value of the X parameter close to 100 characterizes a safe operating regime of the SBR independently of the reaction system, as it will be explained in the following. The integral parameter X therefore does not require any kinetic characterization of the system, but only the much more straightforward estimation of the reaction heat, i.e. the knowledge of the reaction enthalpy and the average specific heats of the reaction mass and the dosing stream, as well as the flowrates of the dosed coreactant and of the coolant.

The parameter X is more advantageous than the differential parameter $\Psi$, whose calculation and use is disclosed in the aforementioned "Maestri and Rota, Kinetic-free safe operation of fine chemical runaway reactions: a general criterion. Ind. Eng. Chem. Res. 2016, 55, 925".

The differential parameter $\Psi$ yields a measure of the instantaneous variation of the operating conditions of the semibatch reactor SBR from a pseudo-steady-state regime, taking into account the combined effect of the chemical reaction ignition and heat removal efficiency.

In particular, the differential parameter $\Psi$ is given by:

$$\Psi = \frac{F_{dos}\tilde{C}_{P,dos}(T - T_{dos}) + \dot{M}_{cool}\hat{C}_{P,cool}(T_{cool,OUT} - T_{cool,IN})}{\frac{F_{A,dos}}{\nu_A}(-\Delta\tilde{H})} \times 100 \qquad (7)$$

In other words, the differential parameter $\Psi$ is the ratio between the actual and target heat removal rates through both the external coolant and the dosing stream, and it is a direct measure of the approach of the semibatch reactor operating regime to low accumulation, nearly isothermal conditions. Under target conditions, it reaches values close to 100, independently of the reaction system.

It is observed that whereas the differential parameter $\Psi$ is an instantaneous process variable useful to monitor the pseudo-steady-state regime of the SBR with respect to the combined effect of the chemical reaction ignition and heat removal efficiency, the integral parameter X is an integral process variable which provides the conversion degree of the fed coreactant under general non-isothermal conditions, independently on any variation of the heat removal efficiency.

It is known that the conventional expressions for the measurement of the reaction extent define the calorimetric conversion as the ratio of the energy removed from the system under isothermal conditions to the whole energy evolved by the chemical reaction. From a physical point of view, the integral parameter X as expressed in equation (6) corresponds to the conversion degree of the dosed coreactant, that is, to the ratio of the reacted to the fed coreactant at the current time (which is indeed an integral parameter). From a mathematical point of view, this is due to the presence of the integral over time in the numerator, which indicates the actual heat removal due to the action of the coolant, the numerator thus indicating the degree of conversion of the fed coreactant, as previously stated.

Therefore, the integral parameter X numerically equals the reaction conversion referred to the previously loaded reactant B only at the end of the dosing period, whereas during the coreactant A supply it is a meaningful process variable allowing for early detecting unexpected reaction inhibitions, that could lead to an uncontrolled coreactant accumulation in the system.

Moreover, through the measured value of the integral parameter X, a new parameter called Maximum Temperature of the Synthesis Reaction under adiabatic conditions, hereinafter referred to as $\Theta$ parameter, can be easily estimated:

$$\Theta = T + (1 - \vartheta X / 100)\Delta T_{ad} \qquad (8)$$

where $\vartheta = t/t_{dos}$. Equation (8) provides (for homogeneous as well as heterogeneous systems) the final reaction temperature that can be reached when, starting from the actual time, the coreactant supply is carried out under adiabatic conditions and the coreactant conversion is complete. The $\Theta$ parameter is therefore a very important parameter, since it is an index of the instantaneous hazard potential of the system accounting for both the coreactant to be dosed as well as for the coreactant accumulated. In other words, the $\Theta$ parameter is the energy potential of the system in terms of maximum allowable temperature under adiabatic condition because of the conversion of all the reactant to be fed and of its accumulated amount. The $\Theta$ parameter is compared with the Maximum Allowable Temperature (MAT) for the system, arising from safety and/or quality constraints.

Suitably, as a key difference with other process variables (such as reaction temperature), both the differential parameter $\Psi$ and the integral parameter X reach a univocal target value (for instance, 100), that is independent on the reaction system as well as on the adopted operating conditions, so that any displacement from the original quick onset, fair conversion and smooth temperature profile (i.e. from the QFS condition) reactor regime can be easily recognized on the basis of their instantaneous values.

The combined use of the X parameter, the $\Psi$ parameter and the $\Theta$ parameter (which form a set of Key Process Indicators, hereinafter indicated ad KPIs) provides a powerful way for monitoring and controlling an exothermic reaction performed in a semibatch reactor SBR.

In particular, through the resulting set of KPIs (that is the parameters $\Psi$, X and $\Theta$) the prompt interruption of the coreactant feed and/or any other specific process emergency action (such as the dilution of the reaction mass or the addition of a inhibitor) can be limited to specific process scenarios, that is to undesired or even dangerous reactivity drops as well as to an early decay of the semibatch reactor SBR heat transfer efficiency, hence excluding the effect of a normal thickening of the reaction mass occurring at sufficiently late fractions of the dosing period.

Such a feature is of particular importance when monitoring the safe and productive operation of semibatch polymerization processes, a huge number of which undergoes relevant viscosity increases with the polymer fraction.

Therefore, after the calculation of the parameters X, $\Psi$, and $\Theta$, the method of the present invention comprises a step of comparing those parameters with predetermined target value thereof in a predetermined sequence, thus resulting in a well-defined monitoring logic, as it will be detailed in the following.

As previously mentioned, the calculation of integral parameter X of the present invention is based on the measurement of process variables, in particular six process variables, i.e. the temperature of the reaction mass and the temperature of the feed stream, the inlet and outlet temperatures of the coolant of the semibatch reactor SBR, the feed stream flowrate, and the coolant flowrate. In particular, the above equations are obtained under the assumption that there is only one heat exchanger (or cooling unit) with which the semibatch reactor SBR is equipped, e.g. only a cooling jacket. In an embodiment which is not part of the present invention, all the above equations can be generalized for cases where the semibatch reactor SBR is cooled by more than one heat exchanger, for example a jacket and a coil and the like. In this case, the integral parameter X can be generalized as:

$$X = \frac{(m\hat{C}_P)_0 (T-T_0) + (m\hat{C}_P)_{fed}(T-T_{dos}) + \sum_{j=1}^{N}\left[\int_0^t (\dot{m}\hat{C}_P \Delta T)_{cool} dt\right]_j}{(-\Delta\hat{H}_r)m_{fed}\omega_A/v_A} \times 100 = \zeta_A \qquad (9)$$

where N is the number of heat exchangers employed.

The same generalization can be done in a similar manner also for the differential parameter $\Psi$, which in this case is given by:

$$\Psi = \frac{(\dot{m}\hat{C}_P)_{dos}(T-T_{dos}) + \sum_{j=1}^{N}(\dot{m}\hat{C}_P)_{cool,j}(T_{cool,OUT}-T_{cool,IN})_j}{(-\Delta\hat{H}_r)\dot{m}_{dos}\omega_A/v_A} \times 100 \qquad (10)$$

Given the above, the integral parameter X can then be used to efficiently monitor the operation of a semibatch reactor SBR. The safe and productive operation of an isoperibolic semibatch reactor SBR, in which a potential runaway reaction is performed, is characterized by a quick ignition of the chemical reaction once the coreactant supply is started and by a nearly isothermal reactor behavior due to a relatively high heat removal efficiency. Such operating conditions, corresponding to a pseudo-steady-state regime of the SBR, can be easily identified at the laboratory or pilot scale through the present invention and finally scaled up to the industrial plant, even without a kinetic characterization of the reaction system. On this basis, for a given process productivity, a required heat transfer surface at the industrial scale can be calculated.

A number of potential runaway non-continuous processes can be mentioned undergoing a significant viscosity rise at the higher conversions, to which a decay of the reaction heat removal efficiency corresponds.

In these cases, yet developing the synthesis recipe at the laboratory scale, a suitable reaction mass concentration has to be adopted, so that the aforementioned thickening phenomena occur at relatively high reaction extents, that is, when the energy potential of the system in terms of coreactant to be dosed as well as of accumulated coreactant is sufficiently low to prevent the overcoming of the maximum allowable temperature MAT, even under adiabatic conditions.

Once the selected operating conditions have been scaled up to the industrial plant, each reaction batch must be monitored in order to promptly trigger the coreactant feed interruption, when detecting any incidental drop of the system reactivity as well as any early decay of the heat removal efficiency.

In the former scenario, even if the reaction system can be reignited (e.g. through an additional catalyst shot), the coreactant feed must be restarted after the system reactivation.

Such a way to proceed is mandatory if the reactivity drop occurs at early fractions of the dosing period, since the sudden reaction of the coreactant residual amount would lead, if fully accumulated, to the thermal loss of control of the chemical reaction and to the triggering of the further incidental scenarios related to it.

However, even if the reactivity drop occurs at sufficiently late fractions of the supply period to make the maximum allowable temperature MAT overcoming impossible, the coreactant feed must be stopped as well. In fact, in particular when dealing with polymerization processes, if the reaction system can be reignited the further sudden reaction of the residual coreactant amount could lead, among the others, to uncontrolled viscosity rises and to the final blockage of the stirrer, due to the formation of a sticky mass.

Instead, if the reaction cannot be reactivated, the further accumulation of unreacted coreactant in the system is not economical, since it implies additional costs either for separating the reaction mass from the unreacted coreactant or for wasting a higher amount of chemicals, one of which (that is, the coreactant) could be recovered as a raw material.

Moreover, when dealing with polymerization processes, it cannot be neglected that the further separation (typically through distillation) of the residual monomer amount from the reaction mass could be even dangerous, since the distillation of the monomer would be performed under uninhibited conditions and could therefore lead to uncontrolled polymerizations occurring in ancillary equipment, that are not designed for safely performing the polymerization reaction.

Dealing with a number of polymerization processes, a huge oversizing of the initially estimated heat transfer surface should be adopted in order to keep nearly isothermal conditions, because of thickening phenomena of the reaction mass occurring at the higher polymer fraction. It is known that such overestimations can be even of a factor ranging from 6 to 10, which would require the installation of relatively large heat transfer equipment.

In these cases, if the reaction temperature increase due to the partial reactor insulation can be accepted, higher conversions can be reached in lower time periods, as a consequence of the higher reaction rates: dealing with polymerization reaction processes, this could be even useful for effectively minimizing the residual monomer amount.

As mentioned above, once the semibatch reactor SBR operating conditions have been identified, the reactor operation during each batch of a productive campaign must be monitored, in order to promptly detect unexpected reaction inhibitions or early drops of the SBR heat transfer efficiency that could lead to undesired or even dangerous process scenarios.

Such scenarios can be represented by an uncontrolled coreactant buildup in the system or by an excessive temperature rise even under fully ignited operating conditions.

Instead, late drops of the SBR heat transfer efficiency can be accepted, provided that the resulting temperature rise does not allow for overcoming a threshold temperature, arising either from safety or from product quality constraints.

If the reactor undergoes a significant drop of the heat removal efficiency due to thickening phenomena of the reaction mass, the $\Psi$ criterion cannot be univocally adopted for monitoring the ignition of the reaction system during the coreactant supply. The differential parameter $\Psi$ is in fact a combined process variable, taking into account for both the reaction ignition and the heat transfer efficiency. This means that the differential parameter $\Psi$ ranging from 80 to 100 during the coreactant supply correspond to a semibatch reactor SBR operating regime in which the coreactant accumulation is effectively limited and the reaction heat is removed at a relatively low time scale.

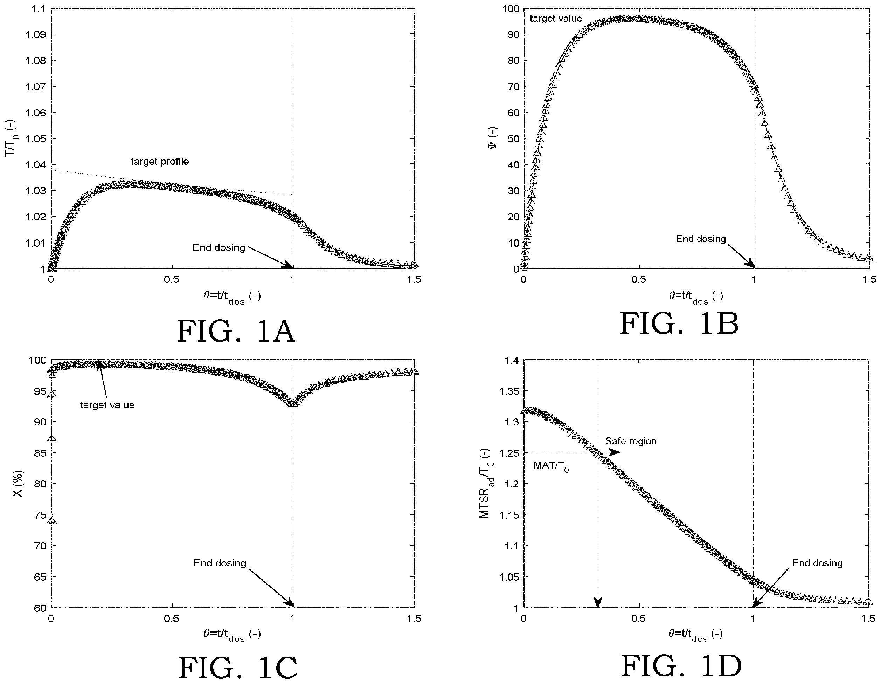

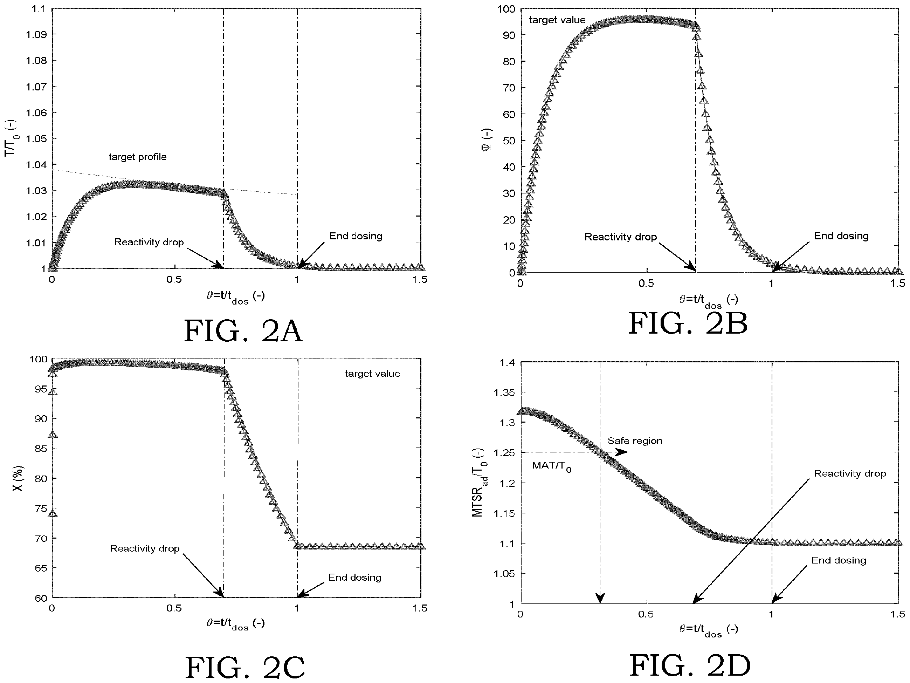

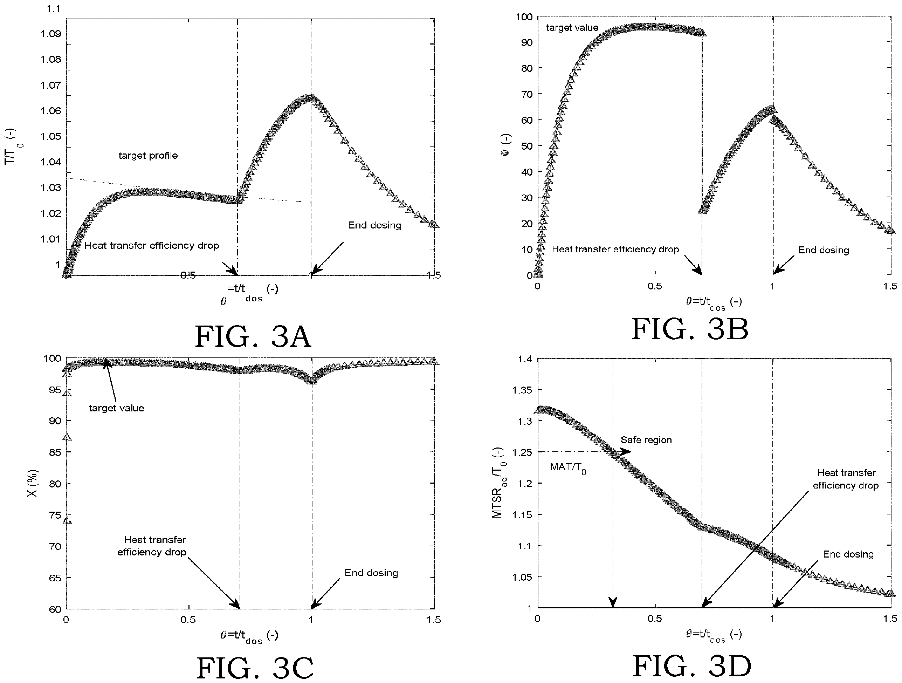

However, if during the coreactant supply a partial thermal insulation of the reaction system occurs, due to a viscosity increase, the differential parameter $\Psi$ typically undergoes a sudden and significant drop even if the chemical reaction is fully ignited. The same qualitative behavior of the differential parameter $\Psi$ would be instantaneously detected if an unexpected reaction inhibition occurred, even with an optimal heat transfer efficiency of the reactor. Typical trends at the target conditions (i.e. the QFS trends, obtained through integration of equations (1) and (2)) of the reactor temperature, $\Psi$, X and $\Theta$ of an exothermic semibatch reactor SBR (see Figures 1A, 1B, 1C and 1D) are compared with the same profiles for two scenarios, corresponding to a sudden reactivity drop (Figures 2A, 2B, 2C and 2D) and to a heat transfer efficiency sudden decay to ¼ of its original value (Figures 3A, 3B, 3C and 3D), both occurring at the 70% of the coreactant supply. In plotting the aforementioned profiles, the initial reaction temperature has been taken as the reference temperature, so that at t=0 the dimensionless reaction temperature is equal to 1. The parameters $\Psi$ and X move instead from 0 at t→0, since at the very beginning of the supply period the system ignition has not yet occurred and therefore the consumption rate of the dosed coreactant is initially equal to 0 as well. Finally, at t=0 all the coreactant to be dosed is available to react, so that the maximum temperature of the synthesis reaction under adiabatic conditions $\Theta$ at t=0 is equal to the initial system temperature plus the adiabatic temperature rise.

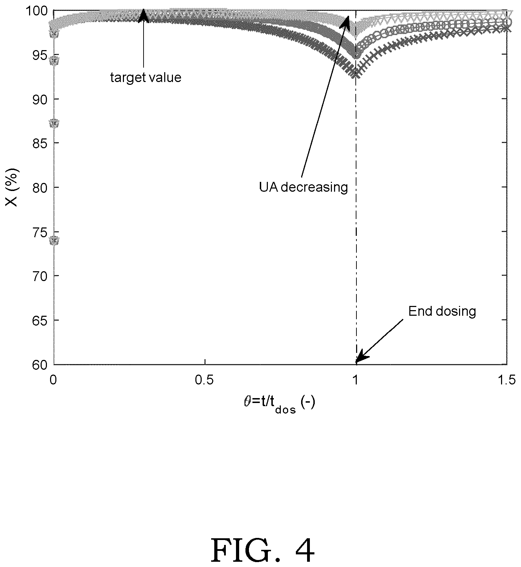

It can be noticed that whereas the differential parameter $\Psi$ time profile undergoes a sudden decay in both the aforementioned incidental scenarios, the integral parameter X quickly decreases only when the reaction heat evolution drops as a consequence of a reaction inhibition. Moreover, according to the X time profiles represented in Figure 4, even ignited reaction systems (from which the reaction heat is effectively removed) undergo a partial accumulation of the dosed coreactant in the final part of the dosing period, where the reactant consumption goes to completion and the reaction characteristic time consequently increases. However, as the semibatch reactor SBR heat transfer efficiency decreases, the resulting increase of the reaction temperature and hence of the reaction rates in the final part of the dosing period overrules the aforementioned effect related to the reactant B consumption, so that the conversion degree of the fed coreactant increases as well, up to values close to 100%.

On the contrary, if the semibatch reactor SBR undergoes an even partial thermal insulation, the differential parameter $\Psi$ suddenly drops to values well below the recommended 80-100 range, with a trend that cannot in principle be distinguished from that characterizing a reactivity drop scenario. Subsequently, as can be observed from the time profile represented in Figure 3B, a partial differential parameter $\Psi$ recovery occurs in the final part of the dosing period, because of the reaction temperature rise (see Figure 3A), to which an increase of the cooling contribution of the dosing stream corresponds. Therefore, the differential parameter $\Psi$ alone is not useful for distinguishing between a reaction inhibition and a reactor thermal insulation scenario.

In fact, if a $\Psi$ drop below the 80-100 range is detected during the coreactant supply, a prompt feed interruption is triggered, in order to prevent an uncontrolled buildup of unreacted coreactant in the system.

However, if the aforementioned $\Psi$ drop is due to a normal heat transfer efficiency decay, a false alarm and a consequent undue feed interruption would be triggered, with detrimental consequences on the process productivity and even on the final product quality. It must in fact be considered that for a number of semibatch polymerization processes a regular monomer feed rate has a significant influence on the characteristics of the final polymer and that a feed interruption can be itself the cause of a further reaction inhibition once the monomer feed is restarted.

In other words, the use of the differential parameter $\Psi$ alone would lead to false alarms, for example due to the fact the at the end of the dosage the differential parameter $\Psi$ signals a normal drop of system reactivity or due to the fact that in polymerization processes it signals normal variations of the reactor heat transfer efficiency (i.e. due to normal thickening of the reaction mass).

For this reason, advantageously according to the present invention, the method provides for a combination of the above defined parameters, in order to avoid false alarms and to improve the efficiency of the monitoring.

As can be noticed from the trends of Figures 3A to 3D, if a reactor partial insulation occurs in an ignited reaction system, the differential parameter $\Psi$ drop is coupled with a simultaneous reaction temperature rise, which does not occur in an inhibited reaction system. Such a combined behavior could in principle be useful for distinguishing between a reaction inhibition and a reactor thermal insulation scenario.

However, in order to keep a simple and therefore robust monitoring logic at the industrial scale, it is useful to identify a process variable other than temperature which displacement from a well-defined and univocal target value allows for selectively identifying reaction inhibition scenarios independently on the heat removal efficiency of the reactor.

Such a goal can be reached through the integral parameter X that, in strict analogy with the differential parameter $\Psi$, can be on-going detected during the coreactant supply on the basis of fully available process variables, that is the initial reactor load and temperature, the currently dosed mass and dosing temperature, the reaction temperature and the coolant mass flowrate and temperature increase across the heat transfer surfaces.

In particular, a full and selective monitoring of the SBR operation can be performed through the integrated set of KPIs given by the differential parameter $\Psi$, the integral parameter X and the resulting maximum temperature of the synthesis reaction under adiabatic conditions $\Theta$. Such parameters can be on-going detected through simple elaboration of the aforementioned process variables, according to the above indicated equations.

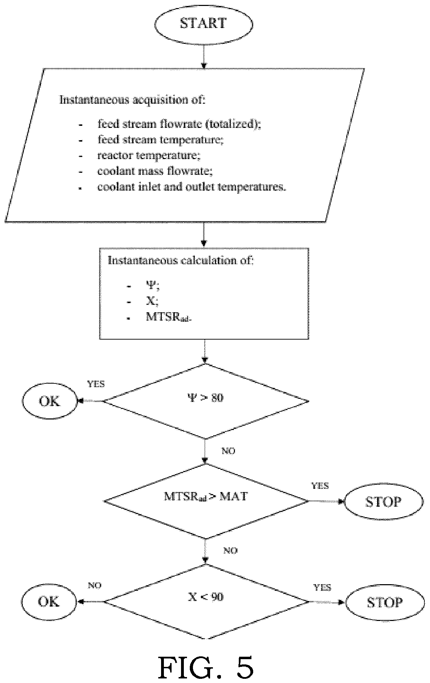

More in detail, starting at a not too early time to let the system trigger and on the basis of the current values of $\Psi$, X and $\Theta$, the monitoring logic represented in the flow chart of Figure 5 could be implemented, acting on switching off the coreactant feed as a final action.

According to such a logic, a current $\Psi$ value ranging from 60 to 100, preferably from 80 to 100, is assumed to be a sufficient condition for going ahead with the coreactant supply, since it corresponds to SBR operating conditions in which the chemical reaction is fully ignited and the reaction heat is effectively removed from the system.

If at any time a $\Psi$ value below 80 is detected, the instantaneous value of the measured $\Theta$ is compared with the maximum allowable temperature MAT: if $\Theta$ is higher than the MAT, the coreactant feed is suddenly stopped without any further check (or any other safety measure can be performed). In fact, even if the differential parameter $\Psi$ drop was related to an early decay of the semibatch reactor SBR heat transfer efficiency without any inhibition of the chemical reaction, the coreactant A feed must be stopped as well, since the energy evolved by the conversion of the residual coreactant would be sufficient to gradually heat up the system above the maximum allowable temperature MAT. In this way, even if a temperature switch high logic acting to stop the coreactant feed is normally installed on any industrial equipment, the prompt detection of an early reactor insulation due e.g. to unexpected thickening phenomena is useful to adopt the necessary preventive actions, such as the dilution of the reaction mass with additional solvent, in order to recover the system fluidity.

If instead the differential parameter $\Psi$ drop is due to a reactivity loss, the sudden reaction of the further accumulated coreactant would potentially lead to an increase of the reaction temperature above the maximum allowable temperature MAT, without any control chance by the plant operator.

If at the time at which the differential parameter $\Psi$ drop is detected the $\Theta$ is lower than the MAT, the check on the integral parameter X is finally performed, with respect to a minimum expected value (for instance, 90) for a satisfactory conversion degree of the dosed coreactant: even in this case a sudden feed interruption is triggered if a low integral parameter X is detected, in order to prevent the coreactant A buildup in the system with the mentioned process consequences related to it.

In other words, according to the method of the present invention, the integral parameter X, the differential parameter $\Psi$ and the $\Theta$ parameter are compared with predetermined values in a sequence so as to trigger the interruption of the coreactant A, and/or any other safety measure such as the dilution of the reaction mass or the instantaneous addition of an inhibitor.

In particular, according to the method of the present invention, the comparison is performed in a predetermined sequence, wherein, firstly, the differential parameter $\Psi$ is compared with the predetermined target value thereof (for instance 80), then, the maximum temperature of the synthesis reaction $\Theta$ is compared with the predetermined target value thereof (i.e. with the maximum allowable temperature MAT), and, finally, the integral parameter X is compared with the target value thereof (in a range from 60 to 100, for instance 90).

Therefore, in case the differential parameter $\Psi$ is lower than the target value thereof and the maximum temperature of the synthesis reaction MTSR is higher than said target value thereof, a dangerous scenario is signaled and/or the feeding of the coreactant A is interrupted. The same occurs if the differential parameter $\Psi$ is lower than the target value thereof and the integral parameter X is lower than the target value thereof.

In other words, the present invention provides checking if the integral parameter and the differential parameter are within a predetermined target range, in particular between 60-100, preferably 80-100, and if the maximum temperature of the synthesis reaction MTSR is higher or lower than the maximum allowable temperature MAT.

Therefore, monitoring the safe SBR operation through the set of KPIs given by $\Psi$, X and $\Theta$ allows for selectively stopping the coreactant A feed only when facing a reactivity drop or an early decay of the semibatch reactor SBR heat transfer efficiency. On the contrary, when dealing with reaction systems undergoing normal thickening of the reaction mass occurring when most of the coreactant has been fed, a selective semibatch reactor SBR monitoring can be performed, without the need of adopting excessive dilutions of the reaction mass for smoothing or even suppressing such phenomena, with detrimental consequences on the process productivity.

It must be stressed that, advantageously according to the method of the present invention, an early warning of a dangerous scenario can be performed through the combined calculation of the above $\Psi$, X and $\Theta$ parameters, thus allowing a preventive approach and not a protective approach. In fact, advantageously according to the present invention, the root cause of an incidental scenario is early detected, allowing for preventive measures against such an incidental scenario. In fact, the drop in the integral parameter X is detected immediately after there is a reactivity drop, and not only just before the thermal runaway.

The method of the present invention thus provides an overall energy balance of the system compared with the target operating conditions, resulting in an on-line monitoring of the energy behavior of the system and allowing for the above mentioned early warning of a dangerous scenario.

The present invention will be now explained in relation to an application thereof to solvent based precipitation polymerization of acrylic acid. However, it has to be understood that the present invention is not limited to a particular kind of reaction and the following example is not limiting the scope of the present invention.

The method of the present invention for on-going detecting the coreactant conversion degree in exothermic SBRs has been tested analyzing a polymerization process of relevant importance in the fine chemical industry, that is the solvent based polymerization of acrylic acid for the synthesis of polyacrylic rheology modifiers. The reaction, commonly performed in solvents such as aliphatic, cycloaliphatic and aromatic hydrocarbons as well as in esters, is strongly exothermic and is characterized by thickening phenomena of the reaction mass as the polymer volume fraction increases.

In order to better control the heat evolution, the reaction can be performed by dosing the monomer over a suitable time period, that is in an indirectly cooled semibatch reactor SBR.

For instance, the polymerization process taken into exam consists of two reaction steps: a pre-polymerization under batch conditions of the 25% of the whole monomer amount and a further semibatch polymerization in which the 75% of the monomer is dosed over the reaction mass at 42-43°C in a suitable period of time, depending on the heat transfer characteristics of the reactor.

In precipitation polymerization processes, the reaction initiation occurs in the solvent continuous phase, whereas the propagation and termination reactions mainly take place in the dispersed polymer phase, after the precipitation of a critical polymer amount, on the surface of which the growing radical chains are fastened and the termination reactions are consequently slowed down. For this reason, the reaction is previously triggered under batch conditions, hence generating an active volume of dispersed polymer phase, where the subsequently dosed coreactant can be consumed from the beginning of the supply period at a much lower time scale than that at which it is fed. In this way, the great part of the reaction heat can be uniformly spread over the dosing period, at the end of which the monomer conversion is relatively high. A final reaction completion under batch conditions allows then for lowering the residual monomer amount below a desired value.

The polymerization process in question has been developed at the laboratory scale in a 2L glass reactor. Under the selected operating conditions, roughly 30' after the catalyst loading, the initial reaction solution (containing the 25% of the whole monomer amount) becomes cloudy as a consequence of a proper triggering of the polymerization reaction. The 75% of the monomer is then dosed over a 2 hours period.

At the higher polymer volume fractions, the reaction mass is likely to undergo sudden viscosity peaks, which are expected to occur at the 70-80% of the monomer feed. Under these conditions, the semibatch reactor SBR heat transfer efficiency drops and the reaction temperature begins to rise. Such a behavior has no influence neither on the process safety, nor on the final product quality, provided that the reaction temperature does not rise above the boiling point of the solvent used. In particular, a slight temperature increase in the final part of the coreactant supply is even useful for early minimizing the unreacted monomer amount, hence allowing for a shorter completion period after the monomer feed.

The table below shows the laboratory and industrial reactor characteristics of the solvent based polymerization of acrylic acid.

| | $V$ ($m^3$) | $V_0$ ($m^3$) | $V_{dos}$ ($m^3$) | $A_0$ ($m^2$) | $U$ ($W/m^2K$) |
|---|---|---|---|---|---|
| **Laboratory reactor** | $2\times10^{-3}$ | $3.1\times10^{-4}$ | $9.4\times10^{-4}$ | $2.1\times10^{-2}$ | 145 |

(continued)

|  | V (m³) | V₀ (m³) | V_dos (m³) | A₀ (m²) | U (W/m²K) |
|---|---|---|---|---|---|
| **Industrial reactor** | 20 | 3.71 | 11.4 | 53.0 | 230 |

In the above table, the geometric and heat transfer characteristics of the laboratory and industrial reactors are summarized, on the basis of which a Westerterp number at the laboratory scale can be calculated as:

$$Wt = \frac{(UA)_0 \tau_{dos}}{\varepsilon(\hat{\rho C}_P V_r)_0} \cong 15 \qquad (11)$$

According to the desired plant productivity, the monomer dosing period at the industrial scale cannot exceed 6 hours.

The scale-up of the selected operating conditions to the industrial plant can then be performed keeping the same Westerterp (11) number at the two scales. With an industrial monomer dosing period equal to 6 hours, the available heat transfer surface is sufficient.

With the aforementioned process and plant data and under full ignition SBR operating conditions, the reaction temperature behavior in the first fraction of the supply period (that is before the reaction mass viscosity rises above critical values) can be satisfactorily approximated through the following expression:

$$T \approx T_{dos} + \frac{\dot{M}_{AA,dos}(-\Delta\hat{H}_r) - UA(T_{dos} - T_{cool})}{(\dot{M}\hat{C}_P)_{dos} + UA} \qquad (12)$$

which in fact provides temperatures values in good agreement with the recorded plant data. In equation (12) the label AA identifies acrylic acid.

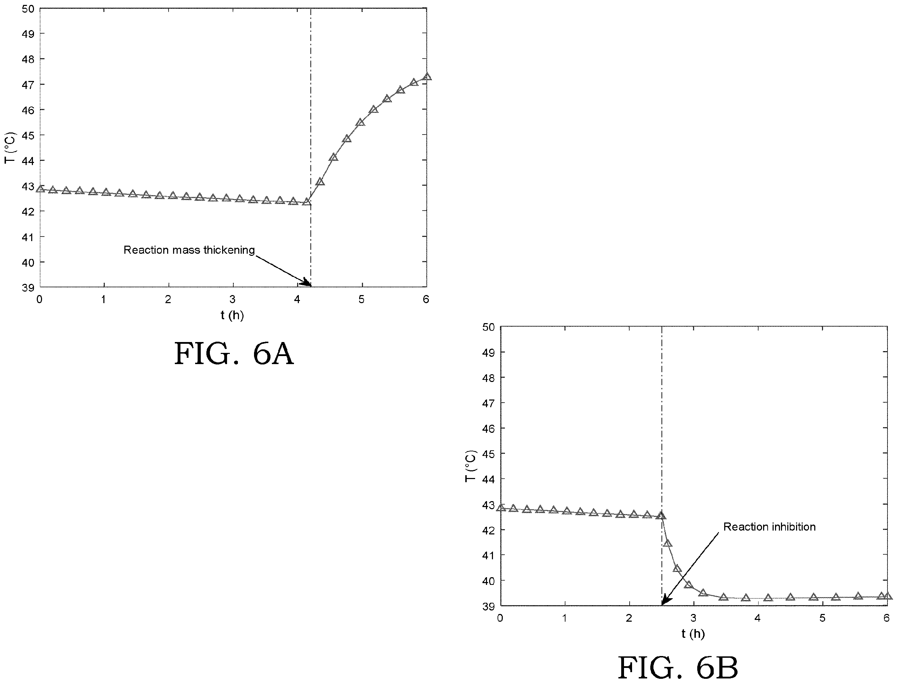

However, in the late fractions of the dosing period (depending on the selected reaction concentrations), thickening phenomena of the reaction mass have been observed, lowering the overall heat transfer coefficient down to about ¼ of its original value. Under such conditions, the reaction temperature rises, as can be noticed from the temperature time profile measured in the industrial scale reactor (see Figures 6A).

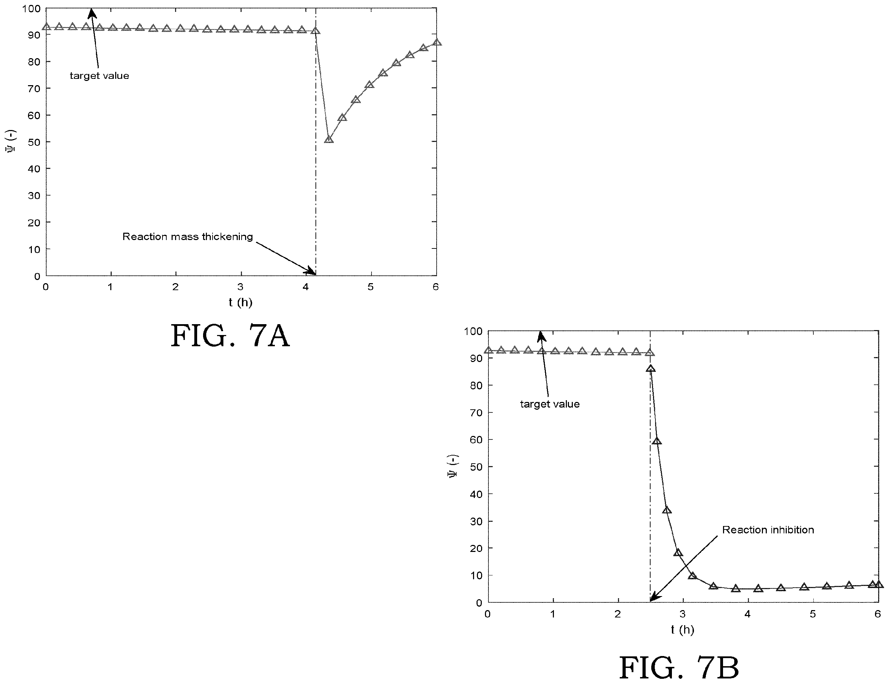

Coherently, Figure 7A shows the differential parameter Ψ trend measured in the industrial scale reactor that undergoes a sudden drop as the reaction mass thickening occurs, with a behavior that cannot be distinguished from the one characterizing a reaction inhibition scenario. It should be noted that when dealing with acrylic polymerizations, the reaction inhibition is likely to occur because of even minimum air leakages into the reaction system, as shown by the experimental data summarized in Figures 6B and 7B, which have been also measured in the industrial scale reactor.

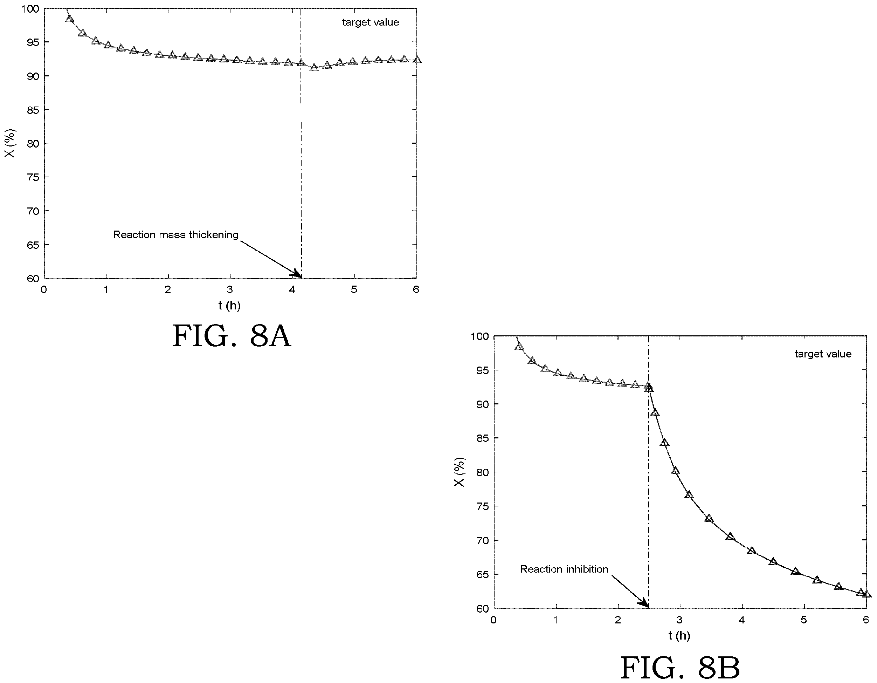

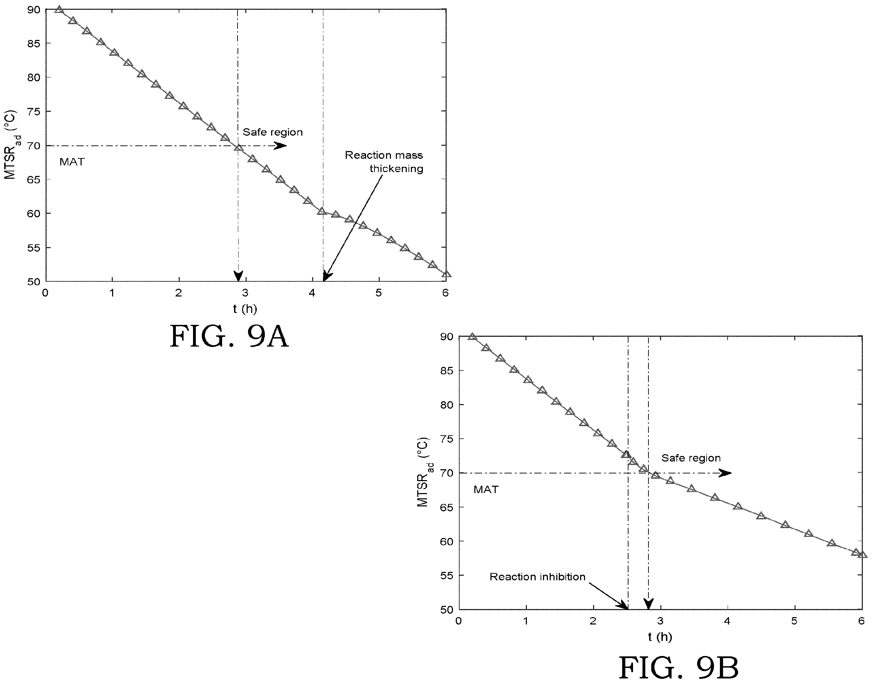

In order to keep at the industrial scale a simple and reliable monitoring logic for the semibatch reactor SBR safe operation, the measurement of the differential parameter Ψ trend must be coupled with those of the integral parameter X and the Θ parameter. The experimental data measured in the industrial scale reactor for the two reaction batches involving mass thickening and reaction inhibition are summarized in Figures 8A and 9B. As a relevant difference with respect to the differential parameter Ψ behavior shown in Figure 7, even when facing a normal decay of the reactor heat removal efficiency due to thickening phenomena, the integral parameter X does not undergo any unexpected drop with respect to the typical range for ignited reaction systems, as shown in Figure 8A since the conversion degree of the coreagent is even favored by higher reaction temperatures. However, when facing a reactivity drop the integral parameter X undergoes a sudden decay (see Figure 8B), hence allowing for a prompt corrective action.

Therefore, through the set of KPIs given by Ψ, X and Θ, the polymerization process in question can be successfully monitored without undue monomer feed interruptions triggered by a normal decay of the SBR heat transfer efficiency, as the polymer volume fraction increases.

The present invention has been successfully applied also on other reactions, such as potential runaway nitration reactions of aromatics compounds through mixed acids. In these cases, during the feed of the species to be nitrated in a well-mixed continuous phase consisting of sulfuric and nitric acid, the method of the present invention allowed for preventing any incidental scenario leading to a reactivity drop with consequent accumulation of the coreactant A (due e.g. to a bad stirring of the reaction mass). This is of particular industrial relevance because of the relatively high reaction heat of nitration process and thermal instability of nitro derivatives, which are likely to undergo gassy decompositions with consequent sudden generation of dangerous reactor overpressures.

The integral parameter X has been described so far for monitoring the safe development of a single reaction process. However, advantageously according to the present invention, the integral parameter X is also useful for the ongoing detection of the triggering of the consecutive degradation of the target product, provided that its thermal effects are not negligible even at the lower reaction extents. In other words, the integral parameter X can be used also in case of multiple consecutive reactions.

In fact, when the consecutive side reaction is negligibly ignited, the integral parameter X defined above corresponds to the conversion degree of the dosed coreactant. In this case, the integral parameter X quickly reaches values close to 100, that cannot be overcome. If an even marginal triggering of a consecutive exothermic event took place, once X has quickly reached values close to 100 (as a consequence of QFS conditions for the main reaction) its trend would not stabilize but would continuously increase above the aforementioned upper limit due to the thermal contribution of the consecutive side reaction. Such a behavior allows for discriminating between the heat effects of the two reactions, provided that a satisfactory selectivity gap exists between them under normal operating conditions.

Therefore, the integral parameter X compares the effective energy increase of the initial reaction mass, of the dosed mass, and of the coolant with a target energy amount coming from the complete and selective conversion of the dosed coreactant, due to the main reaction only. If an exothermic side consecutive reaction takes place with not negligible energy effects, the X number undergoes an anomalous increase above 100.

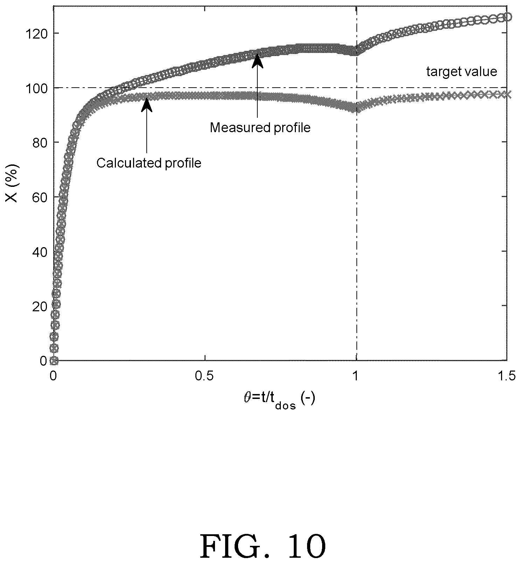

This is illustrated in figure 10, showing that the integral parameter X can be used also for promptly detecting the triggering of a side consecutive reaction, even when the heats of the two involved reactions are similar. In particular, the integral parameter X anomalous increase above 100 can be detected yet at 25% of the supply period, reaching 110 at half dosing.

Once an integral parameter X trend overcoming 100 is detected, the safe and selective operation of the semibatch reactor SBR can be in most cases recovered through a rapid thermal quench of the reaction mass, directly influencing the activation degree of both chemical reactions. To make such a corrective action even prompter, a simultaneous interruption of the coreactant feed could be triggered, so that the exothermic contribution of the main reaction disappears and the reactor cooling is consequently faster. Moreover, depending on the chemical characteristics of any reaction system, once an uncontrolled X number rise is detected, even more targeted corrective actions can be adopted: for the sake of example, the chemical quench of the system through inhibitor shots or the bottom venting of the reaction mass to an unconfined quench pool can be mentioned.

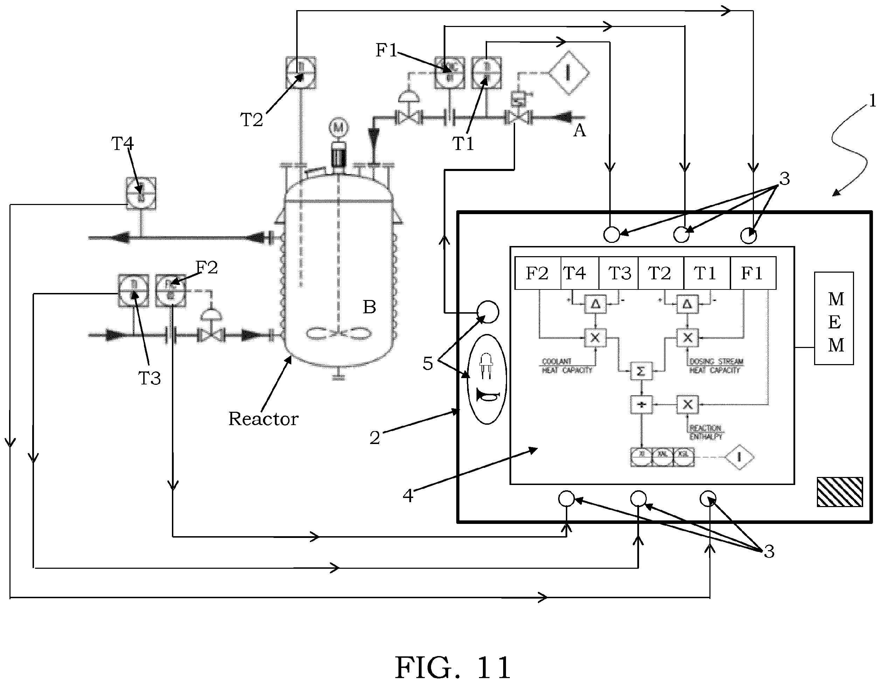

The present invention also refers to a system apt to implement the previous method, such a system being globally and schematically indicated herein with the reference number 1 and being schematically shown in figure 11.

With reference to that figure 11, the system 1 of the present invention is apt to be easily interfaced with a reactor, preferably a semibatch reactor SBR, to perform the monitoring of the operating conditions thereof. The system 1 is an online warning system able to early recognize a dangerous situation in the semibatch reactor SBR and to signal this dangerous situation at an early stage, before significant accumulation can take place.

The early warning of the present invention therefore permits the signaling of the establishment of conditions preluding to a dangerous situation.

As it is known, at least one reactant B is provided in the semibatch reactor SBR and a stoichiometric amount of at least one coreactant A is fed in that semibatch reactor SBR.

The system 1 comprises a housing 2 enclosing the components apt to execute the method of the present invention. The system 1 is equipped with a monitor and means for the interaction with the user (not shown in the figures), such as push buttons or a touch-screen.

The system 1 comprises a unit MEM adapted to store the target operating conditions of the SBR, such target operating conditions corresponding to conditions in which the coreactant accumulation is at the limit negligible, the conversion rate is fully determined by the coreactant supply rate and therefore, at a constant feed rate, the instantaneous conversion equals the current fraction of the overall dosing period, as previously observed.

Process variables, such as the temperature T2 of the reaction mass and the temperature T1 of the feed stream, the inlet and outlet temperatures of the coolant of the SBR, T3 and T4, the feed stream of the reactant A flowrate F1, and the coolant flowrate F2, are measured through sensors and the measured values are sent to the system 1. The system 1 thus comprises means 3 for receiving the measured process variables, which are then processed, these means 3 being for example digital and/or analog inputs.

For example, the temperature signal can be the signal generated by a suitable PT100 connected to the means 3, which are therefore configured for receiving such signal, preferably in the range of 4-20 mA.

In a preferred embodiment of the present invention, the means 3 are configured to receive two temperature values for each temperature (T1, T2, T3, T4) to be measured, so that the system 1 calculates the mean values of these two temperature values. This allows for reducing the fluctuations, limiting the measurement noise of the process variables on the basis of which an integral parameter X is calculated, as it will be shown in the following. In this way, the aforementioned integral parameter X fluctuations can be effectively smoothed. Moreover, it must be taken into account that X is an integral process parameter, which, for this reason, is intrinsically less sensitive to statistical measurement errors of the original process variables.

Advantageously according to the present invention, the system 1 comprises a processing unit 4 for calculating the integral parameter X, which provides the conversion degree of the fed coreactant A as a ratio between the current reaction conversion and its target value, as it was discussed above in greater detail.

Suitably, the system 1 also comprises means 5 apt to generate a signal in case of displacement of the operating conditions of the semibatch reactor SBR from the target operating conditions stored in the unit MEM, i.e. when the parameter X drops below a certain value (e.g. below 90).

In other words, the means 5, suitably connected to the processing unit 4, are activated when there is a displacement from the target operating conditions, as above indicated. The comparison of the integral parameter X and the target conditions is preferably performed in the processing unit 4, even if a dedicated unit can be provided. Furthermore, the unit MEM can be a separated unit or can be integrated in the processing unit 4.

The signal generated by the means 5 can be a warning signal (e.g. a sound signal or a light signal), as well as a trigger signal (for example a TTL signal) to interrupt the feeding of the coreactant A.

Suitably, the integral parameter X is calculated only on the basis of the simply measurable input variables described above: two temperature difference and two flowrates signals (measured through dedicated sensors), as illustrated in figure 11, that is the difference between temperature of the reaction mass T2 and of the feed stream T1, the difference between the outlet, T4, and inlet, T3, temperatures of the coolant, the feed stream flowrate, F1, and the coolant flowrates, F2. In particular, figure 11 refers to the case where a single thermal exchange element is adopted, even if, as stated above, the present invention is not limited to this situation and a number N of different heat exchangers can be used.

On the basis of these fully available signals, the system of the present invention calculates the set of KPIs given by (in addition to the integral parameter X) the differential parameter $\Psi$ and the parameter $\Theta$ and triggers an interruption logic on the coreactant feed in case a dangerous reaction regime occurs, according to the logic described in Figure 5.

In particular, the processing unit 4 is configured to compare in a predetermined sequence the integral parameter X, the differential parameter $\Psi$ and the maximum temperature of the synthesis reaction $\Theta$ with target values thereof, so that the warning signal can be produced from the means 5 as soon as a displacement from the target operating condition is detected, according to the logic sequence previously described.

Moreover, in an embodiment of the present invention, an input filter can be provided to filter and further reduce noise of the input signals. Of course, the input signals can be treated (filtered, amplified), in any conventional suitable way.

In conclusion, the present invention provides, by using an integral form of the energy balance for the SBR, an on-going method and system to measure the coreactant conversion degree, solving the technical problem of the present invention. In particular, the integral form of the energy balance is obtained only through the measure of available process variables, such as the temperature of the reactants and coolant and the flowrates, yielding a set a useful process-indicators. The process indicators of the present invention are thus independent on the reaction kinetic parameters and can be easily calculated all along the supply period through some suitable process variables.

When dealing with fast and exothermic semibatch reaction systems which physical properties undergo significant changes, the safe reactor operation cannot be univocally monitored through the general $\Psi$ criterion. A differential parameter $\Psi$ drop during the coreactant supply could in fact be related to either a dangerous reaction inhibition or a normal decay of the reactor heat transfer efficiency.

Advantageously according to the present invention, through easy to measure process variables, it is possible to easily and efficiently discriminate among safe and unsafe situations.

The resulting set of KPIs has been proven to be useful to monitor the operation of semibatch polymerization processes (a huge number of which undergoes significant viscosity changes with the polymer fraction), using some experimental data measured on an industrial SBR in which the solvent based precipitation polymerization of acrylic acid was performed.

In other words, the present invention enables selecting safe and productive operating conditions of semibatch reactors in which potential runaway reactions are performed, and for scaling them up to the industrial plant. The method is valid even for systems undergoing a significant variation of their physical properties during the reaction and does not require any kinetic characterization of the system itself. The method then enables on-going monitoring safe operating conditions of industrial semibatch runaway reactions without requiring any kinetic characterization of the reaction system and early detecting dangerous operating regime of the reactor, hence allowing for triggering prompt actions aimed to recover the process safety. The set of key process indicators can be easily calculated on the basis of already available temperature and flowrate measurements that are normally recorded for any industrial reactor. The only required information is the heat of reaction. No time and money consuming kinetic characterizations of the reaction system are required. The method can be successfully adopted also for monitoring reaction process undergoing a significant variation of their physical properties during the reaction, but it is not limited to a particular kind of reaction.

The present invention thus can be applied to many situations, providing an early warning of dangerous situation.

Finally, it also observed that the method of the present invention can be simply implemented by an on-line system provided with a processing unit adapted to sample the measured process variables and calculate the required parameters, so that such parameters can be compared with their target values.

The system is therefore very useful for significantly lowering the frequency of occurrence of incidental phenomena in semibatch reactors, with a main focus on process safety but a relevant saving of time and money even when facing non-catastrophic events. The system monitors the expected energy behavior of an exothermic semibatch reaction system, even with reference to product quality constraints.

**Claims**

1. A method for monitoring the safe operation of potential runaway reactions performed in a non-continuous indirectly cooled semibatch reactor (SBR), comprising the steps of:

   - providing at least one reactant (B) in said reactor;
   - feeding at least one coreactant (A);
   - measuring process variables, wherein said process variables comprise at least the temperature (T2) of the reaction mass, the temperature (T1) of the feed stream, the inlet and outlet temperatures (T3, T4) of a coolant of said reactor, the flowrate (F1) of said coreactant (A), and the flowrate (F2) of said at least one coolant;
   - calculating an integral parameter (X) of the conversion degree of said coreactant (A) on the basis of said measured process variables, said integral parameter (X) being the ratio between the reacted coreactant and the fed coreactant, wherein the reacted coreactant is expressed in terms of energy uses as a function of the enthalpy of the reaction mass and of the coolant, and wherein the fed coreactant is expressed in terms of overall energy sources as a function of the reaction enthalpy; and
   - checking if said integral parameter (X) is within a predetermined target range,

   wherein said integral parameter (X) is equal to:

$$X = \frac{(m\hat{C}_P)_0(T-T_0) + (m\hat{C}_P)_{fed}(T-T_{dos}) + \int_0^t (\dot{m}\hat{C}_P \Delta T)_{cool} dt}{(-\Delta H_r) m_{fed} \, \omega_A / v_A} \times 100$$

   where m indicates the mass, $\dot{m}$ indicates the mass flowrate, $\hat{C}_p$ is the mass heat capacity at constant pressure, T is the reactor temperature, $\Delta T$ is the coolant temperature variation, $\Delta H$ is the reaction enthalpy, $\omega_A$ is the mass fraction of said coreactant (A), $v_A$ is the stochiometric coefficient of said coreactant (A), O refers to the beginning of the feeding of said coreactant (A), $T_o$ is the reactor temperature at the beginning of the supply period, *cool* refers to the coolant of said reactor, and dos refers to the dosed coreactant.

2. The method according to claim 1, comprising the step of detecting a displacement of the operating conditions of said reactor from target operating conditions according to a displacement of said integral parameter (X) from said predetermined target range.

3. The method according to claim 1 or 2, further comprising a step of calculating the maximum temperature of the synthesis reaction (Θ) under adiabatic condition of said reactor according to the formula:

$$\Theta = T + (1 - \vartheta X / 100)\Delta T_{ad}$$

   wherein *T* is the temperature, X is said integral parameter, $\vartheta$ is the time *t* divided by the dosing time $t_{dos}$ and *ad* indicates the adiabatic conditions.

4. The method according to any one of the preceding claims, further comprising a step of calculating a differential parameter (Ψ) which is the measure of the instantaneous variation of the operating conditions of said reactor from a pseudo-steady-state regime with respect to both said coreactant (A) accumulation and the reaction temperature, said differential parameter (Ψ) being given by:

$$\Psi = \frac{F_{dos}\tilde{C}_{P,dos}(T - T_{dos}) + \dot{M}_{cool}\hat{C}_{P,cool}(T_{cool,OUT} - T_{cool,IN})}{\frac{F_{A,dos}}{v_A}(-\Delta\tilde{H})} \times 100$$

where $\dot{m}$ is the mass flowrate, $\Delta H$ is the reaction enthalpy, $T$ is the temperature, $\hat{C}_p$ is the mass heat capacity at constant pressure, $\omega_A$ is the mass fraction of said coreactant (A), $v_A$ is the stochiometric coefficient of said coreactant (A), *cool* indicates the coolant of said reactor, and dos relates to the dosed coreactant (A).

5. The method according to claims 3 and 4, comprising a step of checking if said integral parameter (X), said differential parameter ($\Psi$) and said maximum temperature of the synthesis reaction ($\Theta$) are within predetermined target ranges.

6. The method according to claim 5, wherein said step of checking is performed in a predetermined sequence, wherein:

> - firstly, said differential parameter ($\Psi$) is compared with the predetermined target range thereof;
> - then, said maximum temperature of the synthesis reaction ($\Theta$) is compared with the maximum allowable temperature of the system (MAT), as estimated from safety and/or quality constraints of said reactor; and
> - finally, said integral parameter (X) is compared with the predetermined target range thereof.

7. The method according to claim 6, wherein said predetermined target range is between 60 and 100 for said differential parameter ($\Psi$), and is between 60 and 100 for said integral parameter (X).

8. The method according to claim 6 or 7, further comprising a step of signaling a dangerous scenario and/or interrupting the feeding of said coreactant (A) and/or adopting emergency actions for the performed process in case said differential parameter ($\Psi$) is outside the predetermined target range and said maximum temperature of the synthesis reaction ($\Theta$) is higher than the maximum allowable temperature of the system (MAT), or in case said differential parameter ($\Psi$) is outside the predetermined target range and said integral parameter (X) is outside the predetermined target range.

9. The method according to any one of the preceding claims, wherein the reaction occurring in said reactor is a potentially runaway reaction, including polymerizations, nitrations, sulfonations, hydrogenations, halogenations, hydrolysis, condensations, oxydations, alcoholysis, amminations, cyclizations, diazotations, isomerizations, alkylations, and/or multiple consecutive reactions.

10. A system (1) for monitoring the safe operation of potential runaway reactions performed in a non-continuous indirectly cooled semibatch reactor (SBR) in which at least one reactant (B) is provided and in which at least one coreactant (A) is fed, said system (1) comprising:

> - means (3) for receiving measured process variables, wherein said process variables comprise at least the temperature (T2) of the reaction mass, the temperature (T1) of the feed stream, the inlet and outlet temperatures (T3, T4) of a coolant of said reactor, the flowrate (F1) of said coreactant (A), and the flowrate (F2) of said at least one coolant;

said system (1) being **characterized in that** it comprises a processing unit (4) adapted to calculate at least an integral parameter (X) of the conversion degree of said fed coreactant (A) on the basis of said measured process variables, said integral parameter (X) being the ratio between the reacted coreactant and the fed coreactant, wherein the reacted coreactant is expressed in terms of energy uses as a function of the enthalpy of the reaction mass and of the coolant, and wherein the fed coreactant is expressed in terms of overall energy sources as a function of the reaction enthalpy,

> wherein said processing unit (4) is adapted to check if said integral parameter (X) is within a predetermined target range, and
> wherein said integral parameter (X) is equal to:

$$X = \frac{(m\hat{C}_P)_0(T-T_0)+(m\hat{C}_P)_{fed}(T-T_{dos})+\int_0^t (\dot{m}\hat{C}_P\Delta T)_{cool}dt}{(-\Delta \hat{H}_r)m_{fed}\omega_A/v_A} \times 100$$

where m indicates the mass, $\dot{m}$ indicates the mass flowrate, $\hat{C}_p$ is the mass heat capacity at constant pressure, T is the reactor temperature, $\Delta T$ is the coolant temperature variation, $\Delta H$ is the reaction enthalpy, $\omega_A$ is the mass fraction of said coreactant (A), $v_A$ is the stochiometric coefficient of said coreactant (A), O refers to the beginning of the feeding of said coreactant (A), $T_0$ is the reactor temperature at the beginning of the supply period, *cool* refers to the coolant of said reactor, and dos refers to the dosed coreactant.

**11.** The system (1) according to claim 10, **characterized in that** it comprises means (5) apt to generate a signal in case of detection of a displacement of the operating conditions of said reactor from target operating conditions previously stored in said system (1), according to a displacement of said integral parameter (X) from said predetermined target range.

**12.** The system (1) according to claim 11, **characterized in that** said signal generated by said means (5) is a warning signal in the form of an acoustic signal and/or a light signal.

**13.** The system (1) according to claim 11 or 12, **characterized in that** said signal generated by said means (5) is a trigger signal adapted to interrupt the feeding of said coreactant (A) and/or adapted to perform emergency actions for the performed process.

**14.** The system (1) according to any one of the claims from 10 to 13, **characterized in that** said processing unit (4) is adapted to calculate the maximum temperature of the synthesis reaction (Θ) under adiabatic condition of said reactor according to the formula:

$$\Theta = T + (1 - \vartheta X \, / \, 100)\Delta T_{ad}$$

wherein $T$ is the temperature, X is the integral parameter, $\vartheta$ is the time $t$ divided by the dosing time $t_{dos}$ and $ad$ indicates the adiabatic condition.

**15.** The system (1) according to any one of the claims from 10 to 14, **characterized in that** said processing unit (4) is adapted to calculate a differential parameter (Ψ) which is the measure of the instantaneous variation of the operating conditions of said reactor from a pseudo-steady-state regime, said differential parameter Ψ being given by:

$$\Psi = \frac{F_{dos}\tilde{C}_{P,dos}(T - T_{dos}) + \dot{M}_{cool}\hat{C}_{P,cool}(T_{cool,OUT} - T_{cool,IN})}{\frac{F_{A,dos}}{\nu_A}(-\Delta\tilde{H})} \times 100$$

where $\dot{m}$ is the mass flowrate, $\Delta H$ is the reaction enthalpy, $T$ is the temperature, $\hat{C}_p$ is the mass heat capacity at constant pressure, $\omega_A$ is the mass fraction of said coreactant (A), $\nu_A$ is the stochiometric coefficient of said coreactant (A), $cool$ indicates the coolant of said reactor, and dos relates to the dosed coreactant (A).

**16.** The system (1) according to claims 14 and 15, **characterized in that** said processing unit (4) is adapted to compare in a predetermined sequence said integral parameter (X), said differential parameter (Ψ), and said maximum temperature of the synthesis reaction (Θ) with target values thereof.

**Patentansprüche**

**1.** Verfahren zum Überwachen des sicheren Betriebes potentiell außer Kontrolle geratener Reaktionen, die in einem nicht-kontinuierlichen, indirekt gekühlten Semibatch-Reaktor (SBR) durchgeführt werden, wobei das Verfahren die folgenden Schritte umfasst:

- Bereitstellen mindestens eines Reaktanten (B) in dem Reaktor;
- Zuführen mindestens eines Mitreaktanten (A);
- Messen von Prozessvariablen, wobei die Prozessvariablen mindestens die Temperatur (T2) der Reaktionsmasse, die Temperatur (T1) des Zufuhrstroms, die Einlass- und die Auslasstemperatur (T3, T4) eines Kühlmittels des Reaktors, die Strömungsrate (F1) des Mitreaktanten (A) und die Strömungsrate (F2) des mindestens einen Kühlmittels umfassen;
- Berechnen eines integralen Parameters (X) des Umwandlungsgrades des Mitreaktanten (A) auf der Grundlage der gemessenen Prozessvariablen, wobei der integrale Parameter (X) das Verhältnis zwischen dem umgesetzten Mitreaktanten und dem zugeführten Mitreaktanten ist, wobei der umgesetzte Mitreaktant in Form von Energieverbräuchen als eine Funktion der Enthalpie der Reaktionsmasse und des Kühlmittels ausgedrückt wird, und wobei der zugeführte Mitreaktant in Form von Gesamtenergiequellen als eine Funktion der Reaktionsenthalpie ausgedrückt wird; und

- Überprüfen, ob der integrale Parameter (X) innerhalb eines vorgegebenen Zielbereichs liegt, wobei der integrale Parameter (X) mittels folgender Gleichung erhalten wird:

$$X = \frac{(m\hat{C}_P)_0(T-T_0) + (m\hat{C}_P)_{fed}(T-T_{dos}) + \int_0^t (\dot{m}\hat{C}_P\Delta T)_{cool}dt}{(-\Delta H_r)m_{fed}\omega_A/\nu_A} \times 100$$

wobei m die Masse bezeichnet, $\dot{m}$ den der Massenstrom bezeichnet, $\hat{C}_p$ die Massenwärmekapazität bei konstantem Druck ist, T die Reaktortemperatur ist, $\Delta T$ die Temperaturänderung des Kühlmittels ist, $\Delta H$ die Reaktionsenthalpie ist, $\omega_A$ der Massenanteil des Reaktanten (A) ist, $u_A$ der stochiometrische Koeffizient des Mitreaktanten (A) ist, 0 den Beginn der Zufuhr des Mitreaktanten (A) meint, $T_0$ die Reaktortemperatur zu Beginn des Zufuhrzeitraums ist, cool das Kühlmittel des Reaktors meint, und dos den dosierten Mitreaktanten meint.

2. Verfahren nach Anspruch 1, das den Schritt eines Detektierens einer Verschiebung der Betriebsbedingungen des Reaktors von Soll-Betriebsbedingungen gemäß einer Verschiebung des integralen Parameters (X) von dem vorgegebenen Soll-Bereich umfasst.

3. Verfahren nach Anspruch 1 oder 2, das des Weiteren einen Schritt eines Berechnens der maximalen Temperatur der Synthesereaktion (Θ) unter adiabatischen Bedingungen des Reaktors gemäß der folgenden Formel umfasst:

$$\Theta = T + (1 - \vartheta X / 100)\Delta T_{ad}$$

wobei T die Temperatur ist, X der integrale Parameter ist, $\vartheta$ die Zeit t geteilt durch die Dosierzeit $t_{dos}$ ist, und ad die adiabatischen Bedingungen angibt.

4. Verfahren nach einem der vorangehenden Ansprüche, das des Weiteren einen Schritt eines Berechnens eines Differentialparameters (Ψ) umfasst, der das Maß für die augenblickliche Änderung der Betriebsbedingungen des Reaktors von einem Pseudo-Stabilzustandsregime in Bezug sowohl auf die Akkumulation des Mitreaktanten (A) als auch auf die Reaktionstemperatur ist, wobei der Differentialparameter (Ψ) gegeben ist durch:

$$\Psi = \frac{F_{dos}\tilde{C}_{P,dos}(T - T_{dos}) + \dot{M}_{cool}\hat{C}_{P,cool}(T_{cool,OUT} - T_{cool,IN})}{\frac{F_{A,dos}}{\nu_A}(-\Delta\tilde{H})} \times 100$$

wobei $\dot{m}$ der Massenstrom ist, $\Delta H$ die Reaktionsenthalpie ist, T die Temperatur ist, $\hat{C}_p$ die Massenwärmekapazität bei konstantem Druck ist, $\omega_A$ der Massenanteil des Mitreaktanten (A) ist, $u_A$ der stochiometrische Koeffizient des Mitreaktanten (A) ist, cool das Kühlmittel des Reaktors bezeichnet, und dos den dosierten Mitreaktanten (A) meint.

5. Verfahren nach den Ansprüchen 3 und 4, das einen Schritt eines Überprüfens umfasst, ob der integrale Parameter (X), der Differentialparameter (Ψ) und die maximale Temperatur der Synthesereaktion (Θ) innerhalb vorgegebener Sollbereiche liegen.

6. Verfahren nach Anspruch 5, wobei der Schritt des Überprüfens in einer vorgegebenen Reihenfolge durchgeführt wird, wobei:

- zuerst der Differenzparameter (Ψ) mit seinem vorgegebenen Sollbereich verglichen wird;
- dann die maximale Temperatur der Synthesereaktion (Θ) mit der maximal zulässigen Temperatur des Systems (MAT) verglichen wird, die anhand von Sicherheits- und/oder Qualitätseinschränkungen des Reaktors geschätzt wird; und
- zum Schluss der integrale Parameter (X) mit seinem vorgegebenen Sollbereich verglichen wird.

7. Verfahren nach Anspruch 6, wobei der vorgegebene Sollbereich für den Differentialparameter (Ψ) zwischen 60 und 100 liegt und für den integralen Parameter (X) zwischen 60 und 100 liegt.

**8.** Verfahren nach Anspruch 6 oder 7, das des Weiteren einen Schritt eines Signalisierens eines gefährlichen Szenarios und/oder eines Unterbrechens der Zufuhr des Mitreaktanten (A) und/oder eines Ergreifens von Notfallmaßnahmen für den ausgeführten Prozess umfasst, falls der Differentialparameter (Ψ) außerhalb des vorgegebenen Sollbereichs liegt und die maximale Temperatur der Synthesereaktion (Θ) höher ist als die maximal zulässige Temperatur des Systems (MAT), oder falls der Differentialparameter (Ψ) außerhalb des vorgegebenen Sollbereichs liegt und der integrale Parameter (X) außerhalb des vorgegebenen Sollbereichs liegt.

**9.** Verfahren nach einem der vorangehenden Ansprüche, wobei die in dem Reaktor stattfindende Reaktion eine potentiell außer Kontrolle geratene Reaktion ist, einschließlich Polymerisationen, Nitrationen, Sulfonierungen, Hydrierungen, Halogenierungen, Hydrolysen, Kondensationen, Oxydationen, Alkoholysen, Amminierungen, Cyclisierungen, Diazotierungen, Isomerisierungen, Alkylierungen und/oder mehrerer aufeinanderfolgender Reaktionen.

**10.** System (1) zum Überwachen des sicheren Betriebes potentiell außer Kontrolle geratener Reaktionen, die in einem nicht-kontinuierlichen, indirekt gekühlten Semibatch-Reaktor (SBR) durchgeführt werden, in dem mindestens ein Reaktant (B) bereitgestellt wird und in den mindestens ein Mitreaktant (A) eingeleitet wird, wobei das System (1) umfasst:

- ein Mittel (3) zum Empfangen von gemessenen Prozessvariablen, wobei die Prozessvariablen mindestens die Temperatur (T2) der Reaktionsmasse, die Temperatur (T1) des Zufuhrstroms, die Einlass- und die Auslasstemperatur (T3, T4) eines Kühlmittels des Reaktors, die Strömungsrate (F1) des Mitreaktanten (A) und die Strömungsrate (F2) des mindestens einen Kühlmittels umfassen;

wobei das System (1) **dadurch gekennzeichnet ist, dass** es eine Verarbeitungseinheit (4) umfasst, die dafür ausgelegt ist, mindestens einen integralen Parameter (X) des Umwandlungsgrades des zugeführten Mitreaktanten (A) auf der Grundlage der gemessenen Prozessvariablen zu berechnen, wobei der integrale Parameter (X) das Verhältnis zwischen dem umgesetzten Mitreaktanten und dem zugeführten Mitreaktanten ist, wobei der umgesetzte Mitreaktant in Form von Energieverbräuchen als eine Funktion der Enthalpie der Reaktionsmasse und des Kühlmittels ausgedrückt wird, und wobei der zugeführte Mitreaktant in Form von Gesamtenergiequellen als eine Funktion der Reaktionsenthalpie ausgedrückt wird,

wobei die Verarbeitungseinheit (4) dafür ausgelegt ist zu überprüfen, ob der integrale Parameter (X) innerhalb eines vorgegebenen Sollbereichs liegt, und
wobei der integrale Parameter (X) mittels folgender Gleichung erhalten wird:

$$X = \frac{(m\hat{C}_P)_0(T-T_0)+(m\hat{C}_P)_{fed}(T-T_{dos})+\int_0^t(\dot{m}\hat{C}_P\Delta T)_{cool}dt}{(-\Delta H_r)m_{fed}\omega_A/\nu_A} \times 100$$

wobei $m$ die Masse bezeichnet, $\dot{m}$ den der Massenstrom bezeichnet, $\hat{C}_P$ die Massenwärmekapazität bei konstantem Druck ist, $T$ die Reaktortemperatur ist, $\Delta T$ die Temperaturänderung des Kühlmittels ist, $\Delta H$ die Reaktionsenthalpie ist, $\omega_A$ der Massenanteil des Reaktanten (A) ist, $u_A$ *der* stochiometrische Koeffizient des Mitreaktanten (A) ist, *0* den Beginn der Zufuhr des Mitreaktanten (A) meint, $T_0$ die Reaktortemperatur zu Beginn des Zufuhrzeitraums ist, *cool* das Kühlmittel des Reaktors meint, und *dos* den dosierten Mitreaktanten meint.

**11.** System (1) nach Anspruch 10, **dadurch gekennzeichnet, dass** es ein Mittel (5) umfasst, das dafür geeignet ist, im Fall des Detektierens einer Verschiebung der Betriebsbedingungen des Reaktors von zuvor in dem System (1) gespeicherten Soll-Betriebsbedingungen ein Signal gemäß einer Verschiebung des integralen Parameters (X) von dem vorgegebenen Sollbereich zu generieren.

**12.** System (1) nach Anspruch 11, **dadurch gekennzeichnet, dass** das durch das Mittel (5) generierte Signal ein Warnsignal in Form eines akustischen Signals und/oder eines Lichtsignals ist.

**13.** System (1) nach Anspruch 11 oder 12, **dadurch gekennzeichnet, dass** das durch das Mittel (5) generierte Signal ein Auslösesignal ist, das dafür ausgelegt ist, die Zufuhr des Mitreaktanten (A) zu unterbrechen, und/oder dafür ausgelegt ist, Notfallmaßnahmen für den ausgeführten Prozess durchzuführen.

**14.** System (1) nach einem der Ansprüche 10 bis 13, **dadurch gekennzeichnet, dass** die Verarbeitungseinheit (4) dafür ausgelegt ist, die maximale Temperatur der Synthesereaktion (Θ) unter adiabatischen Bedingungen des Reaktors gemäß der folgenden Formel zu berechnen:

$$\Theta = T + (1 - \vartheta X / 100)\Delta T_{ad}$$

wobei $T$ die Temperatur ist, X der integrale Parameter ist, $\vartheta$ die Zeit $t$ geteilt durch die Dosierzeit $t_{dos}$ ist, und *ad* die adiabatische Bedingung angibt.

15. System (1) nach einem der Ansprüche 10 bis 14, **dadurch gekennzeichnet, dass** die Verarbeitungseinheit (4) dafür ausgelegt ist, einen Differentialparameter (Ψ) zu berechnen, der das Maß für die augenblickliche Änderung der Betriebsbedingungen des Reaktors von einem Pseudo-Stabilzustandsregime ist, wobei der Differentialparameter (Ψ) gegeben ist durch:

$$\Psi = \frac{F_{dos}\hat{C}_{P,dos}(T - T_{dos}) + \dot{M}_{cool}\hat{C}_{P,cool}(T_{cool,OUT} - T_{cool,IN})}{\frac{F_{A,dos}}{u_A}(-\Delta \tilde{H})} \times 100$$

wobei $\dot{m}$ der Massenstrom ist, $\Delta H$ die Reaktionsenthalpie ist, $T$ die Temperatur ist, $\hat{C}_p$ die Massenwärmekapazität bei konstantem Druck ist, $\omega_A$ der Massenanteil des Mitreaktanten (A) ist, $u_A$ der stochiometrische Koeffizient des Mitreaktanten (A) ist, *cool* das Kühlmittel des Reaktors bezeichnet, und *dos* den dosierten Mitreaktanten (A) meint.

16. System (1) nach den Ansprüchen 14 und 15, **dadurch gekennzeichnet, dass** die Verarbeitungseinheit (4) dafür ausgelegt ist, in einer vorgegebenen Reihenfolge den integralen Parameter (X), den Differentialparameter (Ψ) und die maximale Temperatur der Synthesereaktion (Θ) mit deren Sollwerten zu vergleichen.

## Revendications

1. Procédé pour surveiller le fonctionnement en toute sécurité de réactions d'emballement potentielles réalisées dans un réacteur semi-continu (SBR) non continu à refroidissement indirect, comprenant les étapes consistant à :

    - placer au moins un réactif (B) dans le réacteur ;
    - introduire au moins un coréactif (A) ;
    - mesurer les variables de processus, où les variables de processus comprennent au moins la température (T2) de la masse réactionnelle, la température (T1) du flux d'introduction, les températures d'entrée et de sortie (T3, T4) d'un réfrigérant du réacteur, le débit (F1) du coréactif (A), et le débit (F2) dudit au moins un réfrigérant ;
    - calculer un paramètre intégral (X) du degré de conversion du coréactif (A) sur la base des variables de processus mesurées, ledit paramètre intégral (X) étant le rapport entre le coréactif ayant réagi et le coréactif introduit, où le coréactif ayant réagi est exprimé en termes d'utilisations d'énergie en tant que fonction de l'enthalpie de la masse réactionnelle et du réfrigérant, et où le coréactif introduit est exprimé en termes de sources d'énergie globales en tant que fonction de l'enthalpie de réaction ; et
    - vérifier si le paramètre intégral (X) est dans une plage cible prédéterminée,

le paramètre intégral (X) étant égal à :

$$X = \frac{(m\hat{C}_P)_0(T-T_0)+(m\hat{C}_P)_{fed}(T-T_{dos})+\int_0^t(\dot{m}\hat{C}_P\Delta T)_{cool}dt}{(-\Delta \tilde{H}_r)m_{fed}\omega_A/\nu_A} \times 100$$

où m indique la masse, $\dot{m}$ indique le débit massique, $\hat{C}_p$ est la capacité thermique massique à pression constante, T est la température du réacteur, ΔT est la variation de température du réfrigérant, ΔH est l'enthalpie de réaction, $\omega_A$ est la fraction massique du coréactif (A), $\nu_A$ est le coefficient stœchiométrique du coréactif (A), 0 désigne le début de l'introduction du coréactif (A), $T_0$ est la température du réacteur au début de la période d'introduction, *cool* désigne le liquide réfrigérant du réacteur, et dos désigne le coréactif dosé.

2. Procédé selon la revendication 1, comprenant l'étape consistant à détecter un déplacement des conditions de fonctionnement du réacteur par rapport aux conditions de fonctionnement cibles en fonction d'un déplacement du paramètre intégral (X) par rapport à la plage cible prédéterminée.

3. Procédé selon la revendication 1 ou 2, comprenant en outre une étape consistant à calculer la température maximale de la réaction de synthèse ($\Theta$) en condition adiabatique du réacteur selon la formule :

$$\Theta = T + (1 - \vartheta X / 100)\Delta T_{ad}$$

où $T$ est la température, X est le paramètre intégral, $\vartheta$ est le temps $t$ divisé par le temps de dosage $t_{dos}$ et ad indique les conditions adiabatiques.

4. Procédé selon l'une quelconque des revendications précédentes, comprenant en outre une étape consistant à calculer un paramètre différentiel ($\Psi$) qui est la mesure de la variation instantanée des conditions de fonctionnement du réacteur à partir d'un régime pseudo-stationnaire du point de vue à la fois de l'accumulation de coréactif (A) et la température de réaction, ledit paramètre différentiel ($\Psi$) étant donné par :

$$\Psi = \frac{F_{dos}\hat{C}_{P,dos}(T - T_{dos}) + \dot{M}_{cool}\hat{C}_{P,cool}(T_{cool,OUT} - T_{cool,IN})}{\frac{\nu_{A,dos}}{\nu_A}(-\Delta \dot{H})} \times 100$$

où $\dot{m}$ est le débit massique, $\Delta H$ est l'enthalpie de réaction, $T$ est la température, $\hat{C}_P$ est la capacité thermique massique à pression constante, $\omega_A$ est la fraction massique du coréactif (A), $\nu_A$ est le coefficient stœchiométrique du coréactif (A), cool indique le réfrigérant du réacteur, et dos se rapporte au coréactif (A) dosé.

5. Procédé selon les revendications 3 et 4, comprenant une étape consistant à vérifier si le paramètre intégral (X), le paramètre différentiel ($\Psi$) et la température maximale de la réaction de synthèse ($\Theta$) sont dans des plages cibles prédéterminées.

6. Procédé selon la revendication 5, dans lequel l'étape de vérification est réalisée selon une séquence prédéterminée, dans laquelle :

   - tout d'abord, le paramètre différentiel ($\Psi$) est comparé à sa plage cible prédéterminée ;
   - puis, la température maximale de la réaction de synthèse ($\Theta$) est comparée à la température maximale admissible du système (MAT), telle qu'estimée à partir des contraintes de sécurité et/ou de qualité du réacteur ; et
   - pour finir, le paramètre intégral (X) est comparé à sa plage cible prédéterminée.

7. Procédé selon la revendication 6, dans lequel la plage cible prédéterminée est comprise entre 60 et 100 pour le paramètre différentiel ($\Psi$), et est comprise entre 60 et 100 pour le paramètre intégral (X).

8. Procédé selon la revendication 6 ou 7, comprenant en outre une étape consistant à signaler un scénario dangereux et/ou à interrompre l'introduction du coréactif (A) et/ou à adopter des actions d'urgence pour le processus réalisé dans le cas où le paramètre différentiel ($\Psi$) est en dehors de la plage cible prédéterminée, et où la température maximale de la réaction de synthèse ($\Theta$) est supérieure à la température maximale admissible du système (MAT), ou dans le cas où le paramètre différentiel ($\Psi$) est en dehors de la plage cible prédéterminée et où le paramètre intégral (X) est en dehors de la plage cible prédéterminée.

9. Procédé selon l'une quelconque des revendications précédentes, dans lequel la réaction se produisant dans le réacteur est une réaction potentiellement d'emballement, incluant les polymérisations, les nitrations, les sulfonations, les hydrogénations, les halogénations, les hydrolyses, les condensations, les oxydations, les alcoolyses, les aminations, les cyclisations, les diazotations, les isomérisations, les alkylations, et/ou les réactions consécutives multiples.

10. Système (1) pour surveiller le fonctionnement en toute sécurité de réactions d'emballement potentielles réalisées dans un réacteur semi-continu (SBR) non continu à refroidissement indirect dans lequel est placé au moins un réactif (B) et dans lequel au moins un coréactif (A) est introduit, le système (1) comprenant :

- des moyens (3) pour recevoir des variables de processus mesurées, où les variables de processus comprennent au moins la température (T2) de la masse réactionnelle, la température (T1) du flux d'introduction, les températures d'entrée et de sortie (T3, T4) d'un réfrigérant du réacteur, le débit (F1) du coréactif (A), et le débit (F2) dudit au moins un réfrigérant ;

le système (1) étant **caractérisé en ce qu'**il comprend une unité de traitement (4) adaptée à calculer au moins un paramètre intégral (X) du degré de conversion du coréactif (A) introduit sur la base des variables de processus mesurées, ledit paramètre intégral (X) étant le rapport entre le coréactif ayant réagi et le coréactif introduit, où le coréactif ayant réagi est exprimé en termes d'utilisations d'énergie en tant que fonction de l'enthalpie de la masse réactionnelle et du réfrigérant, et où le coréactif introduit est exprimé en termes de sources d'énergie globales en tant que fonction de l'enthalpie de réaction,

l'unité de traitement (4) étant adaptée à vérifier si le paramètre intégral (X) est dans une plage cible prédéterminée, et

le paramètre intégral (X) étant égal à :

$$X = \frac{(m\hat{C}_P)_0 (T - T_0) + (m\hat{C}_P)_{fed}(T - T_{dos}) + \int_0^t (m\hat{C}_P \Delta T)_{cool} dt}{(-\Delta H_r) m_{fed} \omega_A / \nu_A} \times 100$$

où m indique la masse, $\dot{m}$ indique le débit massique, $\hat{C}_p$ est la capacité thermique massique à pression constante, $T$ est la température du réacteur, $\Delta T$ est la variation de température du réfrigérant, $\Delta H$ est l'enthalpie de réaction, $\omega_A$ est la fraction massique du coréactif (A), $\nu_A$ est le coefficient stœchiométrique du coréactif (A), 0 désigne le début de l'introduction du coréactif (A), $T_0$ est la température du réacteur au début de la période d'introduction, *cool* désigne le liquide réfrigérant du réacteur, et dos désigne le coréactif dosé.

11. Système (1) selon la revendication 10, **caractérisé en ce qu'**il comprend des moyens (5) aptes à générer un signal en cas de détection d'un déplacement des conditions de fonctionnement du réacteur par rapport aux conditions de fonctionnement cibles précédemment stockées dans le système (1), en fonction d'un déplacement du paramètre intégral (X) par rapport à la plage cible prédéterminée.

12. Système (1) selon la revendication 11, **caractérisé en ce que** le signal généré par les moyens (5) est un signal d'alerte sous la forme d'un signal acoustique et/ou d'un signal lumineux.

13. Système (1) selon la revendication 11 ou 12, **caractérisé en ce que** le signal généré par les moyens (5) est un signal de déclenchement adapté à interrompre l'introduction du coréactif (A) et/ou adapté à réaliser des actions d'urgence pour le processus réalisé.

14. Système (1) selon l'une quelconque des revendications de 10 à 13, **caractérisé en ce que** l'unité de traitement (4) est adaptée à calculer la température maximale de la réaction de synthèse (Θ) en condition adiabatique du réacteur selon la formule :

$$\Theta = T + (1 - \vartheta X / 100) \Delta T_{ad}$$

où $T$ est la température, X est le paramètre intégral, $\vartheta$ est le temps $t$ divisé par le temps de dosage $t_{dos}$ et ad indique la condition adiabatique.

15. Système (1) selon l'une quelconque des revendications de 10 à 14, **caractérisé en ce que** l'unité de traitement (4) est adaptée à calculer un paramètre différentiel (Ψ) qui est la mesure de la variation instantanée des conditions de fonctionnement du réacteur à partir d'un régime pseudo-stationnaire, ledit paramètre différentiel (Ψ) étant donné par :

$$\Psi = \frac{F_{dos} \hat{C}_{P,dos}(T - T_{dos}) + \dot{M}_{cool} \hat{C}_{P,cool}(T_{cool,OUT} - T_{cool,IN})}{\frac{F_{A,dos}}{\nu_A}(-\Delta \tilde{H})} \times 100$$

où $\dot{m}$ est le débit massique, $\Delta H$ est l'enthalpie de réaction, $T$ est la température, $\hat{C}_p$ est la capacité thermique massique à pression constante, $\omega_A$ est la fraction massique du coréactif (A), $\nu_A$ est le coefficient stœchiométrique du coréactif (A), *cool* indique le réfrigérant du réacteur, et dos se rapporte au coréactif (A) dosé.

16. Système (1) selon les revendications 14 et 15, **caractérisé en ce que** l'unité de traitement (4) est adaptée à comparer dans une séquence prédéterminée le paramètre intégral (X), le paramètre différentiel ($\Psi$), et la température maximale de la réaction de synthèse ($\Theta$) avec des valeurs cibles de ceux-ci.

FIG. 1A

FIG. 1B

FIG. 1C

FIG. 1D

FIG. 2A

FIG. 2B

FIG. 2C

FIG. 2D

FIG. 3A

FIG. 3B

FIG. 3C

FIG. 3D

EP 3 621 726 B1

FIG. 4

```
                    ┌─────────┐
                    │  START  │
                    └─────────┘
                         │
                         ▼
    ╱──────────────────────────────────────────╲
   ╱  Instantaneous acquisition of:              ╲
  ╱                                               ╲
 ╱     -   feed stream flowrate (totalized);       ╲
╱      -   feed stream temperature;                 ╲
       -   reactor temperature;
       -   coolant mass flowrate;
       -   coolant inlet and outlet temperatures.
```

Instantaneous acquisition of:

- feed stream flowrate (totalized);
- feed stream temperature;
- reactor temperature;
- coolant mass flowrate;
- coolant inlet and outlet temperatures.

Instantaneous calculation of:

- $\Psi$;
- $X$;
- $MTSR_{ad}$.

$\Psi > 80$ — YES → OK

NO

$MTSR_{ad} > MAT$ — YES → STOP

NO

$X < 90$ — NO → OK

$X < 90$ — YES → STOP

FIG. 5

FIG. 6B

FIG. 6A

FIG. 7A

FIG. 7B

FIG. 8A

FIG. 8B

FIG. 9A

FIG. 9B

FIG. 10

FIG. 11

EP 3 621 726 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **MAESTRI ; ROTA.** Kinetic-free safe operation of fine chemical runaway reactions: a general criterion. *Ind. Eng. Chem. Res.,* 2016, vol. 55, 925

- **MAESTRI ; ROTA.** Kinetic-Free Safe Optimization of a Semibatch Runaway Reaction: Nitration of 4-Chloro Benzotrifluoride. *Ind. Eng. Chem. Res.,* 2016, vol. 55, 12786